(19) Europäisches Patentamt
European Patent Office
Office européen des brevets

(11) **EP 4 190 514 A1**

(12) **EUROPEAN PATENT APPLICATION**
published in accordance with Art. 153(4) EPC

(43) Date of publication:
**07.06.2023 Bulletin 2023/23**

(21) Application number: **21852161.5**

(22) Date of filing: **20.07.2021**

(51) International Patent Classification (IPC):
**B25J 13/08** $^{(2006.01)}$        **B25J 15/08** $^{(2006.01)}$

(52) Cooperative Patent Classification (CPC):
**B25J 13/08; B25J 15/08**

(86) International application number:
**PCT/JP2021/027079**

(87) International publication number:
**WO 2022/030242 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2020 JP 2020131437**

(71) Applicant: **Sony Group Corporation**
**Minato-Ku, Tokyo, 108-0075 (JP)**

(72) Inventor: **FURUYAMA Yoshikazu**
**Tokyo 108-0075 (JP)**

(74) Representative: **D Young & Co LLP**
**120 Holborn**
**London EC1N 2DY (GB)**

(54) **INFORMATION PROCESSING DEVICE, INFORMATION PROCESSING METHOD, AND PROGRAM**

(57)     The present technology relates to an information processing device, an information processing method, and a program capable of appropriately controlling positioning of an operation object.
An information processing device according to the present technology includes a control unit configured to control a position of a hand portion that is used for execution of a task of moving a target object to a specific position and that has a plurality of sensors provided on a surface, on the basis of positional relationship information indicating a positional relationship between the target object and an object in surroundings of the target object, the positional relationship being estimated on the basis of distances measured by the sensors during movement of the hand portion. The present technology can be applied to, for example, a robot that executes a task of moving an object using a hand portion.

FIG. 8

EXAMPLE 1: HOLDING THIN OBJECT (SUCCESSFUL CASE)

**Description**

TECHNICAL FIELD

The present technology relates to an information processing device, an information processing method, and a program, and more particularly, to an information processing device, an information processing method, and a program capable of appropriately controlling positioning of an operation object.

BACKGROUND ART

Various tasks using a robot hand, such as holding an object, are typically implemented by controlling a robot hand and performing success/failure determination of the task on the basis of a sensor value acquired by a sensor.

For example, Patent Document 1 discloses a technique of detecting movement of a target object and a peripheral object on the basis of image information acquired by a vision sensor and force information acquired by a force sensor, and determining whether or not a robot is normally operating the target object.

Patent Document 2 discloses a technique of moving a sensor unit to a position where measurement of an object is easy, and then moving a robot hand on the basis of the position and orientation of the object measured by the sensor unit to hold the object.

CITATION LIST

PATENT DOCUMENT

Patent Document 1: Japanese Patent Application Laid-Open No. 2016-196077
Patent Document 2: Japanese Patent Application Laid-Open No. 2020-16446

SUMMARY OF THE INVENTION

PROBLEMS TO BE SOLVED BY THE INVENTION

In the technique described in Patent Document 1, depending on the positional relationship between the vision sensor and the robot hand, an object may be shielded by the robot hand, so that the vision sensor may not be able to observe the object. In this case, it is difficult to control the robot hand on the basis of the image information.

Furthermore, it is not preferable to estimate the positional relationship between the target object and the peripheral object and the movement amount on the basis of the force information acquired by the force sensor from the viewpoint of estimation accuracy.

In the technique described in Patent Document 2, the measurement result of the position and orientation of the object includes an error, so that the actual position and orientation of the object may deviate from the estimated position and orientation in a case where the robot hand is moved on the basis of one measurement result.

Furthermore, there is a case where the information acquired by the sensor unit cannot be used for the success/failure determination of the task or for the control of the robot hand only by moving the sensor unit to a position where measurement is easy. For example, in a case where the robot hand brought close to an object to hold the object shields the object, the position and orientation of the object cannot be measured by the sensor unit.

The present technology has been made in view of such situations, and an object thereof is to appropriately control positioning of an operation object.

SOLUTIONS TO PROBLEMS

An information processing device according to one aspect of the present technology is an information processing device including a control unit configured to control a position of a hand portion that is used for execution of a task of moving a target object to a specific position and that has a plurality of sensors provided on a surface, on the basis of positional relationship information indicating a positional relationship between the target object and an object in surroundings of the target object, the positional relationship being estimated on the basis of distances measured by the sensors during movement of the hand portion.

In one aspect of the present technology, a position of a hand portion that is used for execution of a task of moving a target object to a specific position and that has a plurality of sensors provided on a surface is controlled on the basis of positional relationship information indicating a positional relationship between the target object and an object in surroundings of the target object, the positional relationship being estimated on the basis of distances measured by the sensors during movement of the hand portion.

BRIEF DESCRIPTION OF DRAWINGS

Fig. 1 is a diagram illustrating an example of external appearance of a robot according to an embodiment of the present technology.
Fig. 2 is an enlarged view of a hand portion.
Fig. 3 is a view illustrating a state of measurement by distance sensors.
Fig. 4 is a view illustrating a state of measurement by the distance sensors.
Fig. 5 is a block diagram illustrating a hardware configuration example of the robot.
Fig. 6 is a block diagram illustrating a functional configuration example of an information processing device.
Fig. 7 is a flowchart for describing processing of the information processing device.
Fig. 8 is a diagram illustrating a state at the time of execution of a task of holding a thin object.
Fig. 9 is a diagram subsequent to Fig. 8, illustrating a state at the time of execution of the task.
Fig. 10 is a diagram illustrating a state at the time of failure of the task.
Fig. 11 is a diagram illustrating a state at the time of failure of the task.
Fig. 12 is a diagram illustrating an example of control by a positioning control unit.
Fig. 13 is a diagram illustrating an example of a contactable area and a command value of a moving speed of the hand portion.
Fig. 14 is a diagram illustrating a state at the time of success of a task of wiping a window using a cleaner.
Fig. 15 is a diagram illustrating a state at the time of success of the task of wiping a window using the cleaner.
Fig. 16 is a diagram illustrating an example of an interval and a command value of the moving speed of the hand portion.
Fig. 17 is a diagram illustrating a state at the time of time of failure of the task of wiping a window.
Fig. 18 is a diagram illustrating a state at the time of success of a task of cutting an object by operating a kitchen knife.
Fig. 19 is a diagram illustrating a state at the time of failure of the task of cutting the object by operating the kitchen knife.
Fig. 20 is a diagram illustrating a state at the time of failure of a task of placing a book between other books.
Fig. 21 is a diagram illustrating a state of a task of positioning an operation object at a specific position of a desk.
Fig. 22 is a diagram illustrating a configuration example of a system.
Fig. 23 is a block diagram illustrating a hardware configuration example of a computer.

MODE FOR CARRYING OUT THE INVENTION

Hereinafter, an embodiment for carrying out the present technology will be described. The description will be given in the following order.

1. External configuration of robot
2. Configuration of robot
3. Operation of information processing device
4. Examples of other tasks
5. Modifications

<1. External configuration of robot>

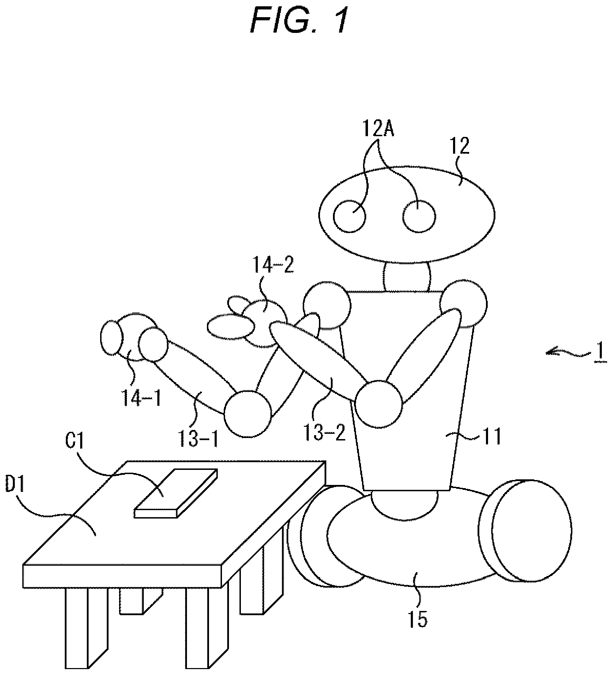

Fig. 1 is a diagram illustrating an example of external appearance of a robot 1 according to an embodiment of the present technology.
As illustrated in Fig. 1, the robot 1 is a robot having a humanoid upper body and a moving mechanism using wheels. A flat sphere-shaped head portion 12 is provided above a body portion 11. On the front face of the head portion 12, two visual sensors 12A are provided to imitate human eyes.
At the upper end of the body portion 11, arm portions 13-1 and 13-2 each including a manipulator with multiple degrees of freedom are provided. Hand portions 14-1 and 14-2 that are end effectors are provided at distal ends of the arm portions 13-1 and 13-2, respectively. The robot 1 has a function of holding an object with the hand portions 14-1 and 14-2.
Hereinafter, in a case where it is not necessary to distinguish the arm portions 13-1 and 13-2, they are collectively referred to as arm portions 13 as appropriate. Furthermore, in a case where it is not necessary to distinguish the hand portions 14-1 and 14-2, they are collectively referred to as hand portions 14. A plurality of other components may be described collectively as appropriate.

A carriage-type moving body portion 15 is provided at a lower end of the body portion 11. The robot 1 can move by rotating the wheels provided on the left and right of the moving body portion 15 or changing the direction of the wheels.

As described above, the robot 1 is a robot capable of executing various tasks such as holding an object by the hand portions 14 and carrying the object in a state of being held. In the example of Fig. 1, a card C1 is placed on a top plate of a desk D1 in front of the robot 1. As described later, the robot 1 executes a series of tasks of picking up the card C1 while monitoring the execution status of the tasks by distance sensors provided on the hand portions 14.

Note that the robot 1 may be configured not as a dual arm robot as illustrated in Fig. 1 but as a single arm robot (the number of the arm portion 13 is one). Furthermore, the body portion 11 may be provided on leg portions instead of the carriage (moving body portion 15) .

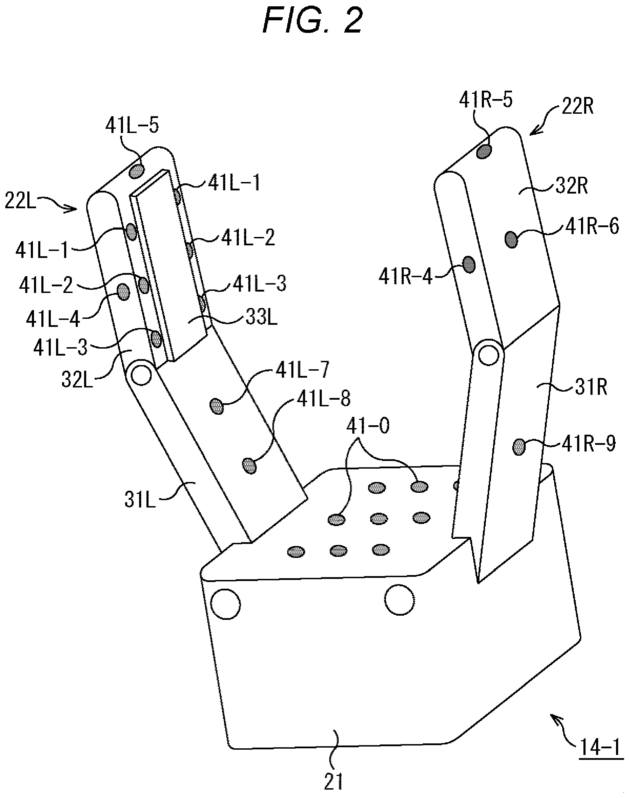

Fig. 2 is an enlarged view of the hand portion 14-1.

As illustrated in Fig. 2, the hand portion 14-1 is a gripper type holding portion with two fingers. A left finger 22L and a right finger 22R that are two finger portions 22 are attached to a base portion 21 having a cubic shape. The base portion 21 functions as a support portion that supports the plurality of finger portions 22.

The left finger 22L is configured by connecting a plate-shaped portion 31L and a plate-shaped portion 32L that are plate-shaped members having a predetermined thickness. The plate-shaped portion 32L is provided on the distal end side of the plate-shaped portion 31L attached to the base portion 21. A coupling portion between the base portion 21 and the plate-shaped portion 31L and a coupling portion between the plate-shaped portion 31L and the plate-shaped portion 32L each have a predetermined movable range. A thin plate-shaped finger contact portion 33L is provided on an inner side of the plate-shaped portion 32L.

The right finger 22R has a configuration similar to that of the left finger 22L. That is, a plate-shaped portion 32R is provided on the distal end side of a plate-shaped portion 31R attached to the base portion 21. A coupling portion between the base portion 21 and the plate-shaped portion 31R and a coupling portion between the plate-shaped portion 31R and the plate-shaped portion 32R each have a predetermined movable range. A thin plate-shaped finger contact portion 33R (not illustrated) is provided on an inner side of the plate-shaped portion 32R.

The left finger 22L and the right finger 22R are opened and closed by moving the respective coupling portions. Various objects such as the card C1 are held so as to be sandwiched between the inner side of the plate-shaped portion 32L and the inner side of the plate-shaped portion 32R. The inner surface of the plate-shaped portion 32L provided with the finger contact portion 33L and the inner surface of the plate-shaped portion 32R provided with the finger contact portion 33R serve as contact surfaces with an object when the object is held.

As illustrated in a color in Fig. 2, a plurality of distance sensors capable of short distance measurement is provided on the surface of each member included in the hand portion 14-1. The distance sensor is, for example, an optical sensor.

For example, on the upper surface of the base portion 21 corresponding to the palm, nine distance sensors 41-0 are provided side by side vertically and horizontally. The distance sensors 41-0 are provided at predetermined intervals.

Furthermore, distance sensors 41L-1, 41L-2, and 41L-3 that are pairs of two distance sensors, are provided on the inner side of the plate-shaped portion 32L, which is a contact surface with an object, in this order from the fingertip side. The two distance sensors constituting each of the distance sensors 41L-1, 41L-2, and 41L-3 are provided across the finger contact portion 33L and the distance sensors 41L-1, 41L-2, and 41L-3 are provided along the edges of the plate-shaped portion 32L.

Distance sensors 41L-4 are provided on the side surfaces of the plate-shaped portion 32L, and a distance sensor 41L-5 is provided on a semi-cylindrical surface serving as a fingertip. On the outer side of the plate-shaped portion 32L, a distance sensor 41L-6 (not illustrated) is provided similarly to the right finger 22R side.

On the inner side of the plate-shaped portion 31L, distance sensors 41L-7 and 41L-8 are provided side by side. On the outer side of the plate-shaped portion 31L, a distance sensor 41L-9 (not illustrated) is provided similarly to the right finger 22R side.

Also on the right finger 22R, distance sensors 41R-1 to 41R-9 are provided similarly to the left finger 22L. That is, the distance sensors 41R-1, 41R-2, and 41R-3 (not illustrated) are provided on the inner side of the plate-shaped portion 32R in this order from the fingertip side, and the distance sensors 41R-4 are provided on the side surfaces of the plate-shaped portion 32R.

The distance sensor 41R-5 is provided on the surface of the fingertip of the plate-shaped portion 32R, and the distance sensor 41R-6 is provided on the outer side of the plate-shaped portion 32R. The distance sensors 41R-7 and 41R-8 (not illustrated) are provided on the inner side of the plate-shaped portion 31R, and the distance sensor 41R-9 is provided on the outer side of the plate-shaped portion 31R.

Hereinafter, in a case where it is not necessary to distinguish the distance sensors 41L-1 to 41L-9 and the distance sensors 41R-1 to 41R-9, they are collectively referred to as distance sensors 41 as appropriate.

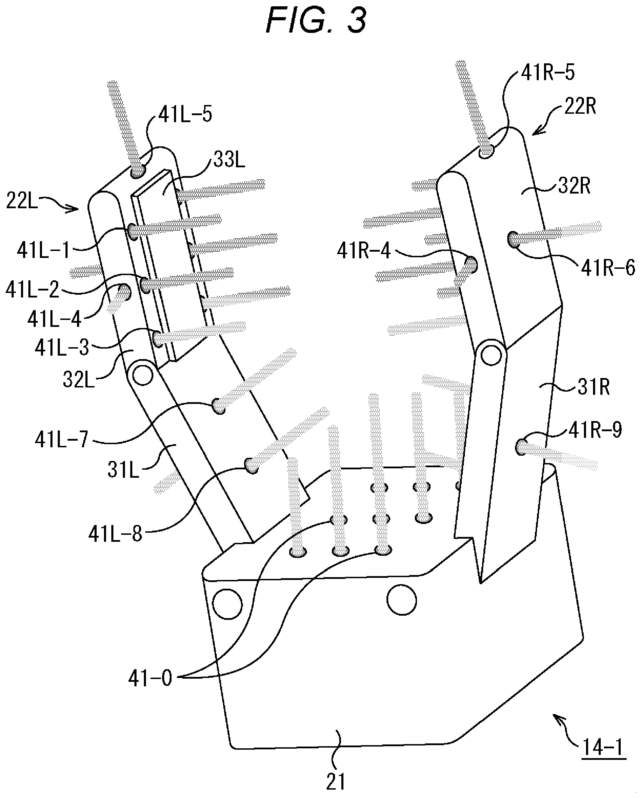

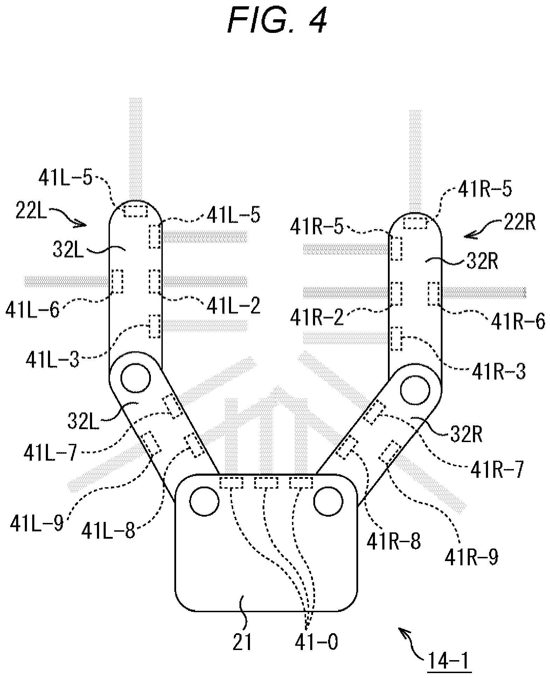

When a task is executed, as illustrated in Figs. 3 and 4, the distance to each position of the object is measured by detecting the reflected light of the light beam emitted from each of the distance sensors 41. In Figs. 3 and 4, the light emitted by the distance sensors 41 are illustrated in a color.

For example, the distance sensors 41-0, the distance sensors 41L-1 to 41L-3, 41L-7, and 41L-8, and the distance sensors 41R-1 to 41R-3, 41R-7, and 41R-8 are used to measure the distance to each position of the object held by the hand portions 14, and the like.

As described above, the distance sensor 41 is provided on each part of the hand portion 14-1, so that the distribution of the distances to the card C1 as the operation object (the distance to each position of the card C1) is measured in real time. Furthermore, the distribution of the distances to the desk D1 included in the environment surrounding the card C1 is measured in real time. The execution status of the task is monitored on the basis of the distance to each position of the card C1 and the desk D1.

The same components as the components of the hand portion 14-1 as described above are also provided in the hand portion 14-2.

Although the hand portions 14 are two-finger type holding portions, a multi-finger type holding portion having different numbers of finger portions, such as a three-finger type holding portion and a five-finger type holding portion, may be provided. The degree of freedom of the finger portion, the number of the distance sensors 41, and the arrangement of the distance sensors 41 can be set in any ways.

<2. Configuration of robot>

• Hardware configuration

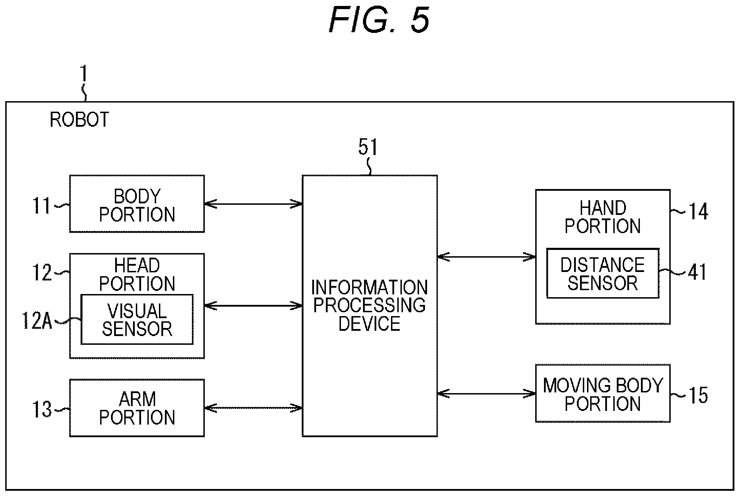

Fig. 5 is a block diagram illustrating a hardware configuration example of the robot 1.

As illustrated in Fig. 5, the robot 1 is configured by connecting each component provided in the body portion 11, the head portion 12, the arm portion 13, the hand portions 14, and the moving body portion 15 to an information processing device 51.

The information processing device 51 includes a computer including a central processing unit (CPU), a read only memory (ROM), a random access memory (RAM), a flash memory, and the like. The information processing device 51 is housed in, for example, the body portion 11. The information processing device 51 executes a predetermined program by the CPU to control the overall operation of the robot 1.

The information processing device 51 recognizes the environment around the robot 1 on the basis of the detection result by the sensors, the images captured by the visual sensors, and the like, and executes a task according to the recognition result. Various sensors and cameras are provided in each of the body portion 11, the head portion 12, the arm portions 13, the hand portions 14, and the moving body portion 15. For example, the head portion 12 is provided with the visual sensors 12A including RGB cameras or the like. The hand portions 14 are provided with the distance sensors 41.

• Functional configuration

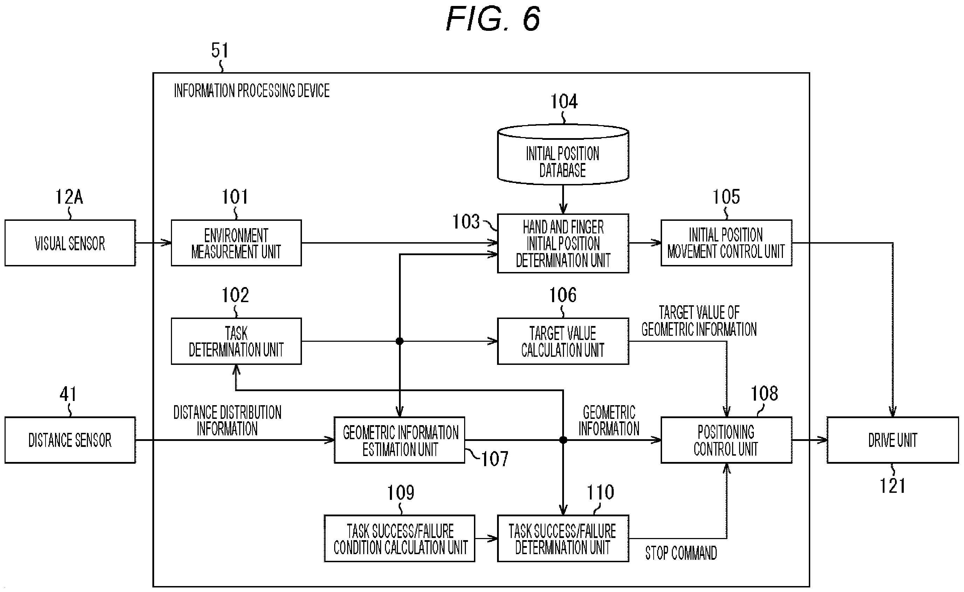

Fig. 6 is a block diagram illustrating a functional configuration example of the information processing device 51.

As illustrated in Fig. 6, the information processing device 51 includes an environment measurement unit 101, a task determination unit 102, a hand and finger initial position determination unit 103, an initial position database 104, an initial position movement control unit 105, a target value calculation unit 106, a geometric information estimation unit 107, a positioning control unit 108, a task success/failure condition calculation unit 109, and a task success/failure determination unit 110. At least a part of the functional units illustrated in Fig. 6 is implemented by executing a predetermined program by the CPU of the information processing device 51.

The environment measurement unit 101 performs three-dimensional measurement on an operation object and objects included in the environment surrounding the operation object on the basis of the output of the visual sensors 12A. By performing the three-dimensional measurement, the position and shape of the operation object, the shape of the object included in the environment surrounding the operation object, and the like are calculated. The measurement result by the environment measurement unit 101 is output to the hand and finger initial position determination unit 103.

The task determination unit 102 determines a task to be executed and outputs information indicating the content of the task. The information indicating the content of the task includes information indicating what kind of information is used as the geometric information. As described later, the geometric information is information used for monitoring the execution status of the task as well as control of each unit. The information output from the task determination unit 102 is supplied to the hand and finger initial position determination unit 103, the target value calculation unit 106, and the geometric information estimation unit 107.

The hand and finger initial position determination unit 103 determines use sensors that are the distance sensor 41 used for monitoring the execution status of the task according to the task determined by the task determination unit 102. Among the plurality of distance sensors 41 provided on the hand portions 14, the distance sensors 41 suitable for monitoring the execution status of the task are determined as use sensors.

Furthermore, the hand and finger initial position determination unit 103 calculates the initial positions of the distance sensors 41 determined as the use sensors on the basis of the measurement result by the environment measurement unit 101 and the content of the task determined by the task determination unit 102.

Candidates for the initial positions of the distance sensors 41 are set in advance for every type of content of the task. The information indicating the candidates of the initial position is stored in the initial position database 104 and read by the hand and finger initial position determination unit 103 as appropriate. Information indicating the initial positions of the distance sensors 41 calculated by the hand and finger initial position determination unit 103 are output to the initial position movement control unit 105.

The initial position movement control unit 105 controls a drive unit 121 so that the distance sensors 41 are positioned at the initial positions calculated by the hand and finger initial position determination unit 103. The drive unit 121 corresponds to drive portions of the robot 1 including the arm portions 13, the hand portions 14, and the moving body portion 15.

The target value calculation unit 106 calculates a target value of the geometric information on the basis of the information supplied from the task determination unit 102, and outputs the target value to the positioning control unit 108.

The geometric information estimation unit 107 acquires distance distribution information measured by the distance sensors 41. The distance distribution information indicates a distance to each position of an operation object and an object included in the environment. The geometric information estimation unit 107 estimates the geometric information determined by the task determination unit 102 on the basis of the distance distribution information, and outputs the estimated geometric information to the task determination unit 102, the positioning control unit 108, and the task success/failure determination unit 110.

The positioning control unit 108 performs positioning control by controlling the drive unit 121 so that the geometric information estimated by the geometric information estimation unit 107 reaches the target value supplied from the target value calculation unit 106. The positioning control is control for moving the operation object to a predetermined position. Furthermore, the positioning control is also control for moving the arm portions 13 and the hand portions 14 so that the distance sensors 41 come to predetermined positions.

The task success/failure condition calculation unit 109 determines a success condition and a failure condition of the task, and outputs information indicating the success condition and the failure condition to the task success/failure determination unit 110.

The task success/failure determination unit 110 determines success or failure of the task being executed according to whether or not the geometric information estimated by the geometric information estimation unit 107 satisfies the condition determined by the task success/failure condition calculation unit 109. In a case where it is determined that the task has succeeded or the task has failed, the task success/failure determination unit 110 outputs a stop command to the positioning control unit 108. The result of success/failure determination of the task is also supplied to other processing units such as the task determination unit 102 as appropriate.

<3. Operation of information processing device>

• Example of task of holding thin object

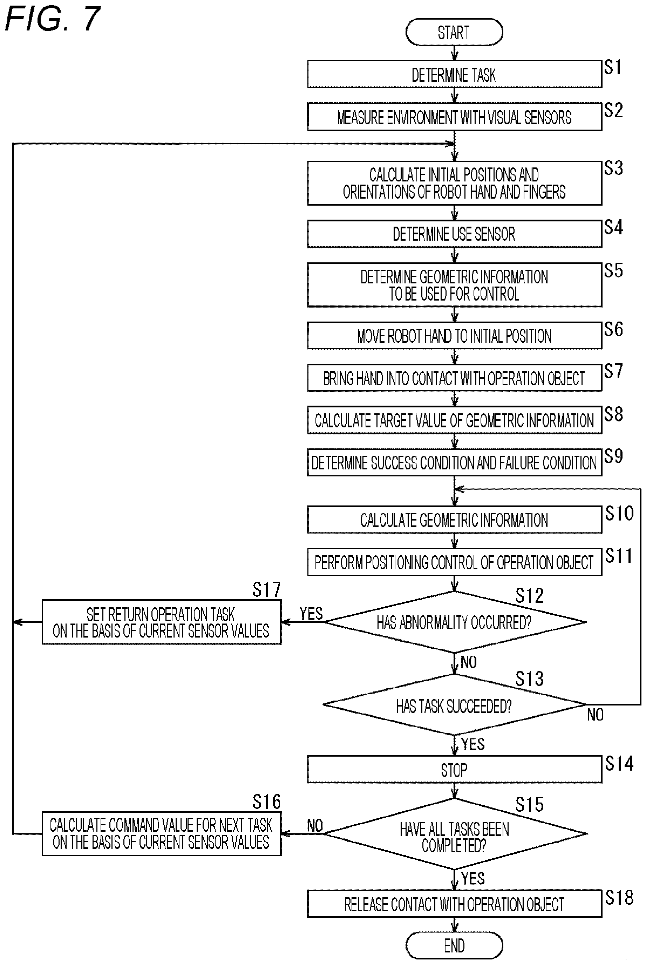

The processing of the information processing device 51 will be described with reference to the flowchart of Fig. 7.

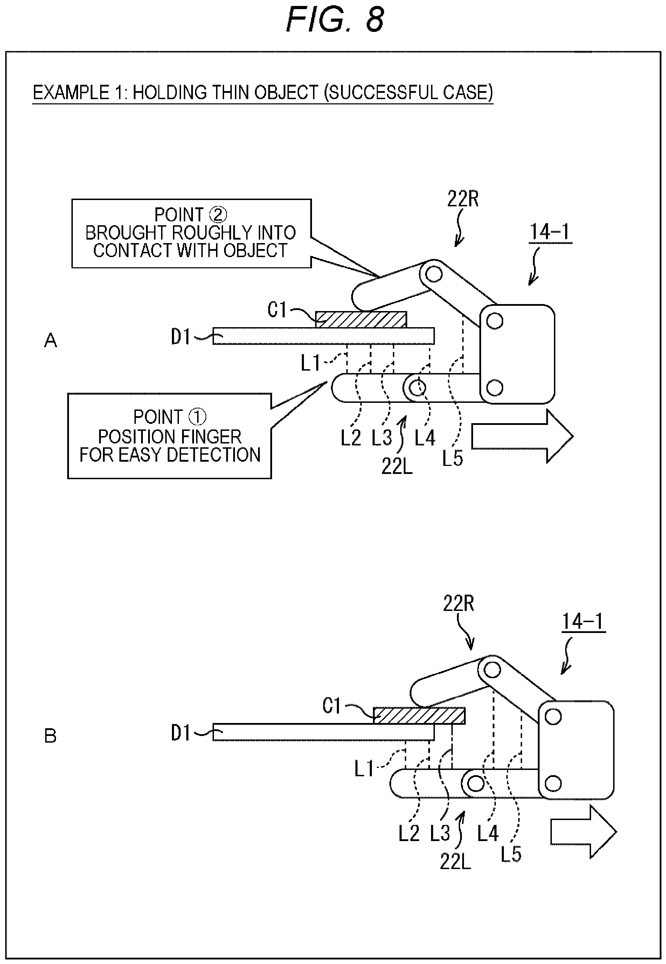

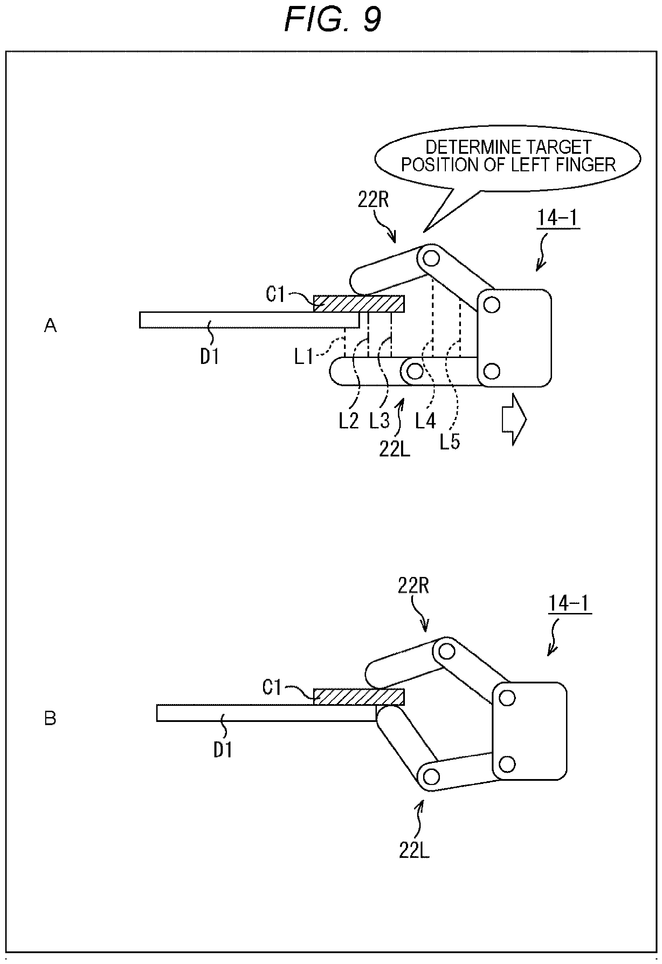

Here, processing in a case where a task of holding the card C1 placed on the top plate of the desk D1 is executed will be described appropriately referring to states at the time of execution of the task illustrated in Figs. 8 and 9.

When a thin object such as the card C1 is held, a human often picks up the object by using a nail, or picks up the object after translating the object to the front side of the desk D1. The latter operation, that is, translating the card C1 to the front side of the desk D1 and then picking up the card C1 is implemented by the information processing device 51.

In step S1, the task determination unit 102 determines a task to be executed.

The task of holding the card C1 includes a task of translating the card C1 to the front side to allow the card C1 to be sandwiched between the left finger 22L and the right finger 22R, and a task of bringing the left finger 22L into contact with the lower surface of the card C1 (task of sandwiching the card C1 between the left finger 22L and the right finger 22R). The task determination unit 102 determines to first execute a task of translating the card C1 to the front side.

In step S2, the environment measurement unit 101 performs three-dimensional measurement of the environment on the basis of the output of the visual sensors 12A. By performing three-dimensional measurement, the position and shape of the card C1, the shape of the desk D1, and the like are recognized.

In step S3, the hand and finger initial position determination unit 103 calculates the initial positions of the hand portions 14 and the finger portions 22 on the basis of the content of the task and the measurement result by the environment measurement unit 101. Together with the positions, the respective orientations of the hand portions 14 and the finger portions 22 are also calculated.

In step S4, the hand and finger initial position determination unit 103 determines a use sensor.

Here, the initial position of each of the hand portions 14 and the finger portions 22 is calculated in step S3 and the use sensor is determined in step S4 so as to be a position suitable for monitoring the execution status of the task.

Fig. 8 is a diagram illustrating a state at the time of execution of a task of holding a thin object.

For example, as illustrated in A of Fig. 8, initial positions that make the left finger 22L positioned under the desk D1 and the right finger 22R brought into contact with the upper surface of the card C1 are calculated.

In the example in A of Fig. 8, the distance sensors 41L-1 to 41L-3 and the distance sensors 41L-7 and 41L-8 (Fig. 2) provided on the inner side of the left finger 22L are determined as use sensors. The initial positions illustrated in A of Fig. 8 are positions where the distance sensors 41 provided on the inner side of the left finger 22L are provided side by side in parallel to the moving direction of the card C1. In A of Fig. 8, the horizontal right direction indicated by the white arrow is the moving direction of the hand portion 14, that is, the moving direction of the card C1.

Such an initial position of each portion is selected according to the task determined by the task determination unit 102. Various methods can be used as a method of determining the initial positions in addition to programming in advance such that the determination according to the task is performed.

For example, initial positions or the like most suitable for detection of success or failure of a task may be determined using an inference model obtained by machine learning. In this case, an inference model is generated by performing machine learning using time-series sensor data pieces at the time of task success and at the time of task failure recorded when executing the task with setting the positions of the hand portions 14 to various positions.

Returning to the description of Fig. 7, in step S5, the task determination unit 102 determines geometric information to be used for control of the drive unit 121.

The geometric information is information indicating at least a part of the state of the object including a size (area), an inclination, a distance, and the like and is obtained on the basis of the distance measured by the distance sensors 41 during the movement of the hand portions 14. Since the geometric information changes according to the positional relationship between the operation object and objects surrounding it, the geometric information is used for monitoring the execution status of the task as information indicating the positional relationship between the operation object and the objects surrounding it during execution of the task (during movement of the hand portion 14) together with the control of the drive unit 121.

In a case where the task of translating the card C1 is executed, the contactable area S, which is an area where the left finger 22L can be brought into contact, is determined as the geometric information. The contactable area $S_{est}$ is expressed by Equation (1) below.

[Equation 1]

$$S_{est} = nA \qquad \cdot \cdot \cdot (1)$$

In Equation (1), n represents the number of the distance sensors 41 that have measured sensor values within the effective distance range. A represents a footprint area of the distance sensors 41.

The effective distance range is a range of a distance larger (longer) than the distance from the distance sensor 41 (the distance sensor 41 on the left finger 22L) to the desk D1 and smaller (shorter) than the distance from the distance sensor 41 to the right finger 22R, which is the finger portion 22 on the opposite side.

Since the left finger 22L is positioned under the desk D1, the contactable area $S_{est}$ is an area, in the entire card C1, of a region protruding from the edge portion of the desk D1.

In addition to the contactable area of the operation object, distances measured by the distance sensors 41, an orientation (inclination) of the operation object with respect to the environment, and the like can be used as the geometric information. An example of using information other than the contactable area of the operation object as the geometric information will be described later with reference to an example of executing another task.

In step S6, the initial position movement control unit 105 moves the hand portion 14 to the initial position calculated by the hand and finger initial position determination unit 103.

In step S7, the initial position movement control unit 105 brings the hand portion 14 into contact with the operation object. Specifically, as described with reference to A of Fig. 8, the initial position movement control unit 105 brings the right finger 22R roughly into contact with the upper surface of the card C1.

After the left finger 22L and the right finger 22R are positioned at the initial positions illustrated in A of Fig. 8, distances are measured by the distance sensors 41L-1 to 41L-3, 41L-7, and 41L-8, which are use sensors. Light beams L1 to L5 indicated by broken lines in A of Fig. 8 represent light beams emitted from the distance sensors 41L-1 to 41L-3, 41L-7, and 41L-8, respectively.

In the case of A of Fig. 8, the sensor values indicating the distances to the desk D1 are measured by the distance sensors 41L-1 to 41L-3 and 41L-7, and the sensor value indicating the distance to the right finger 22R is measured by the distance sensor 41L-8. Since there is no distance sensor that measures the distance within the effective distance range, the contactable area is 0 in this case.

In step S8, the target value calculation unit 106 calculates a target value of the geometric information. The control of the hand portion 14 and the like is performed so as to make the geometric information close to the target value.

In step S9, the task success/failure condition calculation unit 109 determines a success condition and a failure condition of the task.

For example, the task success/failure condition calculation unit 109 sets, as a threshold value, an area that allows the left finger 22L to be in contact with the lower surface of the card C1, and determines, as a success condition, that the contactable area $S_{est}$ is larger than the threshold value. The target value calculated by the target value calculation unit 106 in step S8 is an area used as a threshold of the success condition.

Furthermore, the task success/failure condition calculation unit 109 determines, as a failure condition, that the contactable area $S_{est}$ is smaller than the target value and the sensor values of all the distance sensors 41 measuring sensor values that are out of the effective distance range are within an abnormal range. Of the distances out of the effective distance range, the distance from the distance sensor 41 provided on the left finger 22L to the right finger 22R is set as the abnormal range.

Note that a plurality of conditions may be determined as failure conditions. For example, together with the failure condition described above, the minimum value of the sensor values measured by the distance sensors 41 provided on the left finger 22L (the shortest distance to the desk D1) becomes smaller than that at the start of the task is determined as the failure condition. In this case, it is meant that the hand portion 14 cannot slide parallel to the top plate of the desk D1, and the right finger 22R is away from the card C1.

In step S10, the geometric information estimation unit 107 calculates the contactable area $S_{est}$ on the basis of the sensor values measured by the distance sensors 41.

In step S11, the positioning control unit 108 performs positioning control on the basis of the contactable area $S_{est}$ estimated by the geometric information estimation unit 107.

Specifically, the positioning control unit 108 slides the hand portion 14-1 in the state illustrated in A of Fig. 8 in parallel to the desk D1. By sliding the hand portion 14-1 to translate the card C1, a part of the card C1 protrudes from the edge portion of the desk D1 as illustrated in B of Fig. 8.

In this case, as indicated by the light beam L3 indicated by an alternate long and short dash line, the distance sensors 41L-3 measure the sensor values within the effective distance range from the distance sensors 41 to the card C1. In this state, a predetermined area is obtained as the contactable area $S_{est}$.

In the example of B of Fig. 8, the distance sensors 41L-1 and 41L-2 measure the distances from the distance sensors 41 to the desk D1, that is, the sensor values out of the effective distance range. Furthermore, the distance sensors 41L-7 and 41L-8 measure the distances to the right finger 22R, that is, the sensor values out of the effective distance sensor.

As described later, the control by the positioning control unit 108 is performed such that the hand portion 14-1 (drive unit 121) is moved while being decelerated as the contactable area $S_{est}$, which is geometric information, increases.

In step S12, the task success/failure determination unit 110 determines whether or not an abnormality has occurred.

In a case where it is determined in step S12 that no abnormality has occurred, in step S13, the task success/failure determination unit 110 determines whether or not the task has succeeded. Here, in a case where the contactable area $S_{est}$ satisfies the success condition, it is determined that the task has succeeded.

In a case where it is determined in step S13 that the task has not succeeded, the processing returns to step S10, and the subsequent processing is repeated. The positioning control unit 108 continues to slide the hand portion 14-1 until the contactable area reaches the target value.

In a case where it is determined in step S13 that the task has succeeded since the contactable area $S_{est}$ has reached the target value, the positioning control unit 108 stops the sliding of the hand portion 14-1 according to a stop command from the task success/failure determination unit 110 in step S14.

Fig. 9 is a diagram subsequent to Fig. 8, illustrating a state at the time of execution of the task.

As indicated by the light beams L2 and L3 indicated by alternate long and short dash lines in A of Fig. 9, in a case where the sensor values measured by the distance sensors 41L-2 and 41L-3 are within the effective distance range, the contactable area $S_{est}$ reaches the target value, and it is determined that the task of translating the card C1 to the front side has succeeded. At this time, a state where a task of bringing the left finger 22L into contact with the lower surface of the card C1 is executed next is made.

In step S15, the task determination unit 102 determines whether or not all the tasks have been completed.

In a case where it is determined in step S15 that all the tasks are not completed because, for example, there is a task of bringing the left finger 22L into contact with the lower surface of the card C1, the target value calculation unit 106 calculates, in step S16, a command value for the next task on the basis of the current sensor values. The calculation of the command value for the next task is performed after the task of bringing the left finger 22L into contact with the lower surface of the card C1 is determined as a task to be executed next by the task determination unit 102.

For example, as illustrated in a word balloon in A of Fig. 9, the target value calculation unit 106 calculates a target position of the left finger 22L as a command value on the basis of the sensor values acquired by the distance sensors 41L-1 to 41L-3, 41L-7, and 41L-8.

After the command value for the next task is calculated, the processing returns to step S3, and processing similar to the processing described above is performed.

That is, the processing of moving the left finger 22L while monitoring the execution status of the task using the geometric information is performed, so that the left finger 22L comes into contact with the lower surface of the region of the card C1 protruding from the edge portion of the desk D1 and the card C1 is held as illustrated in B of Fig. 9. In the task of bringing the left finger 22L into contact with the card C1, for example, the distance sensor 41L-5 provided at the fingertip of the left finger 22L is used as a use sensor. Furthermore, the distance from the distance sensor 41L-5, which is a use sensor, to the card C1 is used as the geometric information.

On the other hand, in a case where the failure condition is satisfied in step S12, the task success/failure determination unit 110 determines that an abnormality has occurred.

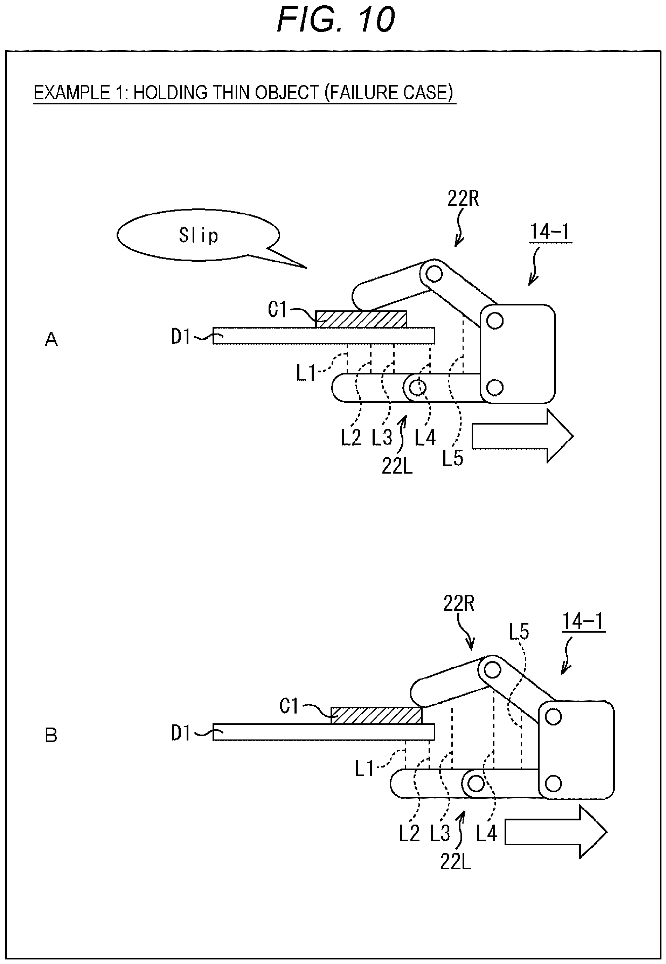

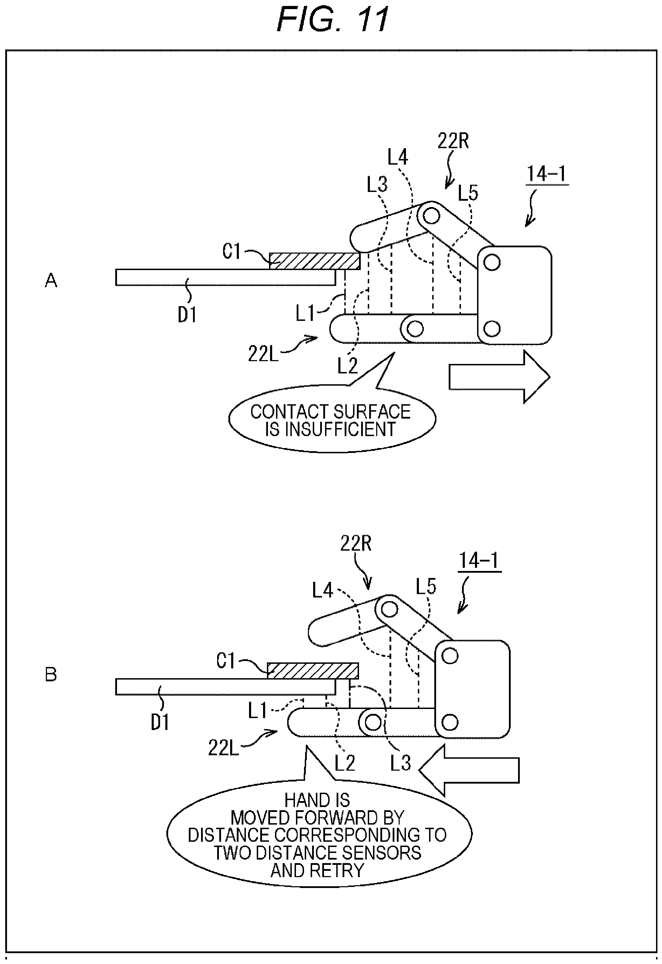

Figs. 10 and 11 are diagrams illustrating states at the time of failure of a task.

In a case where the force of pressing the card C1 with the right finger 22R is weak, even if the hand portion 14-1 is slid to move the card C1, slipping occurs between the right finger 22R and the card C1 as illustrated in a word balloon in A of Fig. 10.

In a case where the hand portion 14-1 is slid while the slipping occurs, the card C1 is slightly translated but does not protrude from the edge portion of the desk D1 as illustrated in B of Fig. 10.

In this case, as indicated by the light beams L1 and L2 indicated by broken lines, sensor values out of the effective distance range are measured by the distance sensors 41L-1 and 41L-2, respectively. Furthermore, as indicated by the light beams L3 to L5 indicated by broken lines, the sensor values within the abnormal range are measured by the distance sensors 41L-3, 41L-7, and 41L-8, respectively.

Since the distance sensors 41L-1 or 41L-2 does not measure a sensor value within the abnormal range, the sliding of the hand portion 14-1 is continued. As the sliding is continued, the card C1 is slightly translated further as illustrated in A of Fig. 11. In this case, the contactable area $S_{est}$ of the card C1 is smaller than that in the case of A of Fig. 9 in which the hand portion 14-1 can be slid without slipping.

In A of Fig. 11, as indicated by the light beam L1 indicated by an alternate long and short dash line, sensor values within the effective distance range are measured only by the distance sensors 41L-1. Since the contactable area $S_{est}$ is smaller than the target value and the sensor values of all the distance sensors 41 measuring the sensor values out of the effective distance range are within the abnormal range, it is determined that the failure condition is satisfied, that is, the task of translating the card C1 to the front side has failed.

In a case where it is determined in step S12 that an abnormality has occurred due to satisfaction of the above-described failure condition, the task determination unit 102 sets, in step S17, a return operation task on the basis of the current sensor value. Thereafter, the processing returns to step S3, and the return operation task is executed by processing similar to the processing described above.

For example, the task determination unit 102 determines a return operation task of performing the task of translating the card C1 again as a task to be executed next. The target value calculation unit 106 calculates a target value of the movement amount of the return operation task by Equation (2) on the basis of the contactable area $S_{est}$.
[Equation 2]

$$n_{ref} = \left| \frac{S_{ref} - S_{est}}{A} \right| + n \qquad \cdots (2)$$

In Equation (2), $n_{ref}$ represents the number of the distance sensors 41 that measure sensor values within the effective distance range necessary for the contactable area to reach the target value. n represents the current number of the distance sensors 41 that measure sensor values within the effective distance range. $S_{ref}$ represents a target value of the contactable area.

Equation (2) indicates that the contactable area $S_{est}$ becomes larger than the target value $S_{ref}$ if the region of the card C1 corresponding to the footprint area of the $n_{ref}$ distance sensors 41 protrudes from the edge portion of the desk D1.

The positioning control unit 108 moves the hand portion 14-1 to a position where the number of the distance sensors 41 that measure distances to the desk D1 is $n_{ref}$. For example, as illustrated in B of Fig. 11, the positioning control unit 108 moves the hand portion 14-1 forward (in the direction of the fingertip of the hand portion 14-1) indicated by the white arrow by a distance corresponding to two of the distance sensors 41 (the distance sensors 41L-1 and 41L-2).

As described above, the operation of moving the hand portion 14-1 by a distance corresponding to $n_{ref}$ of the distance sensors 41 is performed as the return operation task. After the return operation task is performed, for example, the task of increasing the force of pressing the card C1 with the right finger 22R to translate the card C1 is performed again.

In a case where the task of translating the card C1 to the front side fails, there is a possibility that the card C1 has moved from the position at the start of the task. In this case, even if the hand portion 14-1 is moved to the initial position of the task, the hand portion 14-1 cannot be brought into contact with the card C1 in some cases.

In such a case, in the conventional methods, the hand portion is once moved to a position away from the desk, and then the environment is measured again using a visual sensor, and the hand portion is moved again according to the recognized position of the card.

With the above-described processing, it is possible to resume the task by moving the hand portion 14-1 by the minimum necessary movement amount without once moving the hand portion 14-1 away from the desk D1. That is, the information processing device 51 can quickly perform the task again.

Returning to the description of Fig. 7, in a case where it is determined in step S15 that all the tasks have been completed, in step S18, the positioning control unit 108 releases the contact with the operation object and ends the processing.

• Example of control by positioning control unit 108

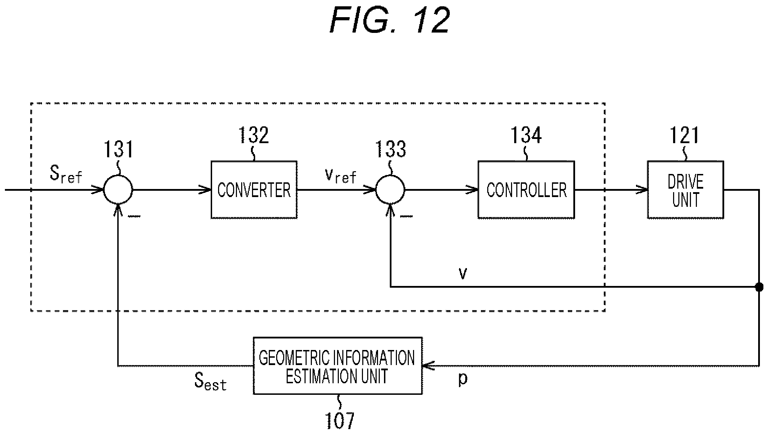

Fig. 12 is a diagram illustrating an example of control by the positioning control unit 108.

As described above, the control of the hand portion 14 by the positioning control unit 108 is performed such that the hand portion 14 is moved while being decelerated as the contactable area $S_{est}$, which is the geometric information, increases.

The control by the positioning control unit 108 is implemented by a subtractor 131, a converter 132, a subtractor 133, and a controller 134. The subtractor 131, the converter 132, the subtractor 133, and the controller 134, which are surrounded by a broken line in Fig. 12, are provided in the positioning control unit 108.

The subtractor 131 calculates a difference between the target value $S_{ref}$ of the contactable area and the contactable area $S_{est}$ estimated by the geometric information estimation unit 107, and outputs the difference to the converter 132.

The converter 132 applies the conversion coefficient K to the difference supplied from the subtractor 131 to calculate the target value $v_{ref}$ of the moving speed. For example, as the difference between the target value $S_{ref}$ and the contactable area $S_{est}$ is smaller, a smaller value is calculated as the target value $v_{ref}$ of the moving speed. The converter 132 outputs the target value $v_{ref}$ of the moving speed to the subtractor 133.

The subtractor 133 calculates a difference between the target value $v_{ref}$ supplied from the converter 132 and the actual moving speed v of the drive unit 121, and outputs the difference to the controller 134.

The controller 134 controls the drive unit 121 so that the difference between the moving speeds supplied from the subtractor 133 becomes 0.

The actual moving speed v of the drive unit 121 is measured by a sensor provided in each unit and supplied to the subtractor 133. Furthermore, the three-dimensional coordinates p of each measurement point of the distance sensor 41 are supplied to the geometric information estimation unit 107. For example, in a case where N distance sensors 41 are provided, the three-dimensional coordinates p are represented by a $3 \times N$ matrix.

The geometric information estimation unit 107 estimates the contactable area $S_{est}$ on the basis of the three-dimensional coordinates p, and outputs the contactable area $S_{est}$ to the subtractor 131.

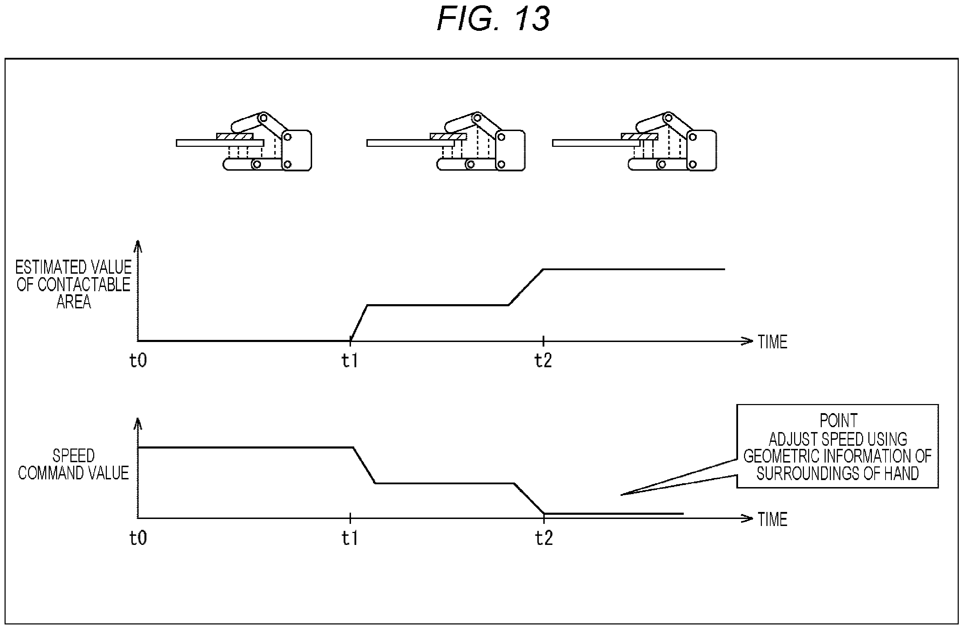

Fig. 13 is a diagram illustrating an example of the contactable area and the command value of the moving speed of the hand portion 14.

The upper part of Fig. 13 indicates the contactable area $S_{est}$, and the lower part indicates the command value of the moving speed with respect to the hand portion 14. The horizontal axis in Fig. 13 represents time.

As described with reference to A of Fig. 8, the period from time t0 to time t1 is a period in which a sensor value within the effective distance range is not measured by any of the distance sensors 41. In this period, the contactable area $S_{est}$ is 0. Furthermore, the command value of the moving speed is a predetermined speed.

As described with reference to B of Fig. 8, the period from time t1 to time t2 is a period in which sensor values within the effective distance range are measured by the distance sensors 41L-3. In this period, the contactable area $S_{est}$ increases more than before time t1. Furthermore, the command value of the moving speed is a value lower than that before time t1.

As described with reference to A of Fig. 9, the period after time t2 is a period in which sensor values within the effective distance range are measured by the distance sensors 41L-2 and 41L-3. In this period, the contactable area $S_{est}$ increases more than before time t2. Furthermore, the command value of the moving speed is a value lower than that before time t2.

As described above, the control of the hand portion 14 by the positioning control unit 108 is performed such that the moving speed of the hand portion 14 is adjusted according to the change in the contactable area $S_{est}$ as the geometric information.

• Effects

As described above, in the robot 1, the distance sensors 41 are positioned at positions where it is easy to measure the displacement between the operation object and the environment according to the content of the task to be executed. Therefore, it is possible to constantly monitor the progress status of a task in which a robot hand would shield the operation object from a camera at a fixed position to make measurement difficult.

The robot 1 can improve the accuracy and success rate of a task of moving an operation object to a target position.

Furthermore, in the robot 1, it is not necessary to measure the contact position between the card C1 and the hand portion 14-1, and it is possible to succeed a task of translating the card C1 only by bringing the hand portion 14-1 into contact with an approximate target position.

Typically, in a case where a robot hand is controlled on the basis of information acquired by a camera at a fixed position, it is necessary to measure the positional relationship between a card and a desk at the start of the task and the positional relationship between the card and the robot hand.

In the robot 1, the visual sensors 12A are used only for measuring the positional relationship between the card C1 and the desk D1 at the start of the task. The control of the hand portion 14-1 and the success determination of the task are performed on the basis of the relative displacement between the card C1 and the desk D1 measured by the distance sensor 41 provided on the left finger 22L. Since the contact position between the card C1 and the hand portion 14-1 is not so important, the hand portion 14-1 does not need to contact the center of the card C1, and may contact the front side or the back side of the card C1.

Moreover, in the robot 1, the geometric information is calculated on the basis of the distance distribution information measured by the distance sensors 41, and the control of the hand portion 14 and the success determination of the task are performed according to the change in the geometric information. In a case of executing a task for which success or failure is determined by the positional relationship between the operation object and the environment, the robot 1 can control the hand portion 14 and determine the success of the task with easy observation and a simple algorithm.

<4. Examples of other tasks>

Examples in which the present technology is applied to other tasks will be described later. Note that the basic flow of the tasks is similar to the flow of the task of holding the card C1 described with reference to Figs. 8 to 11.

• Example of wiping task

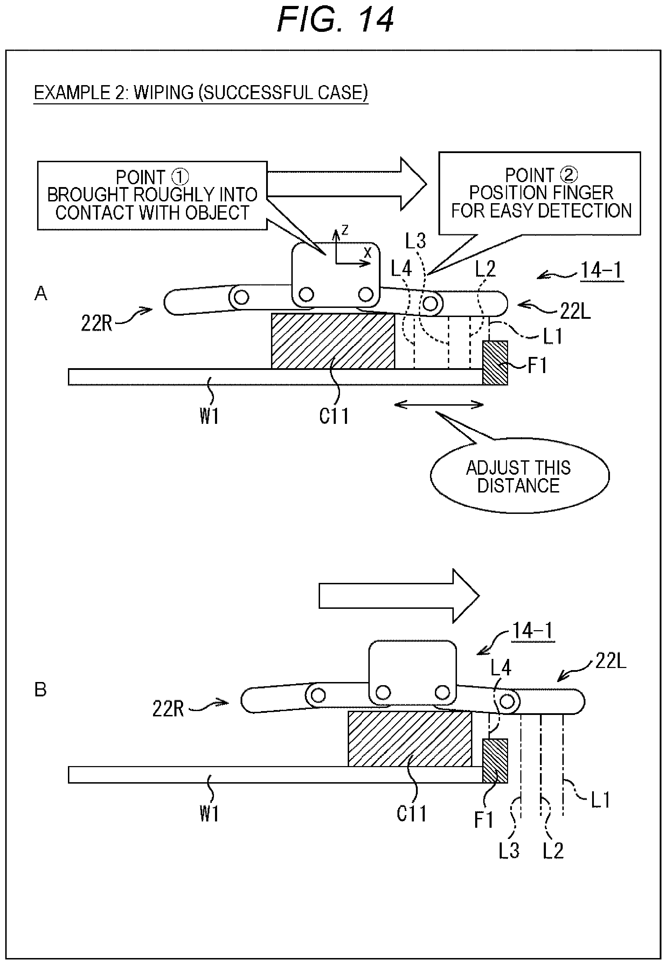

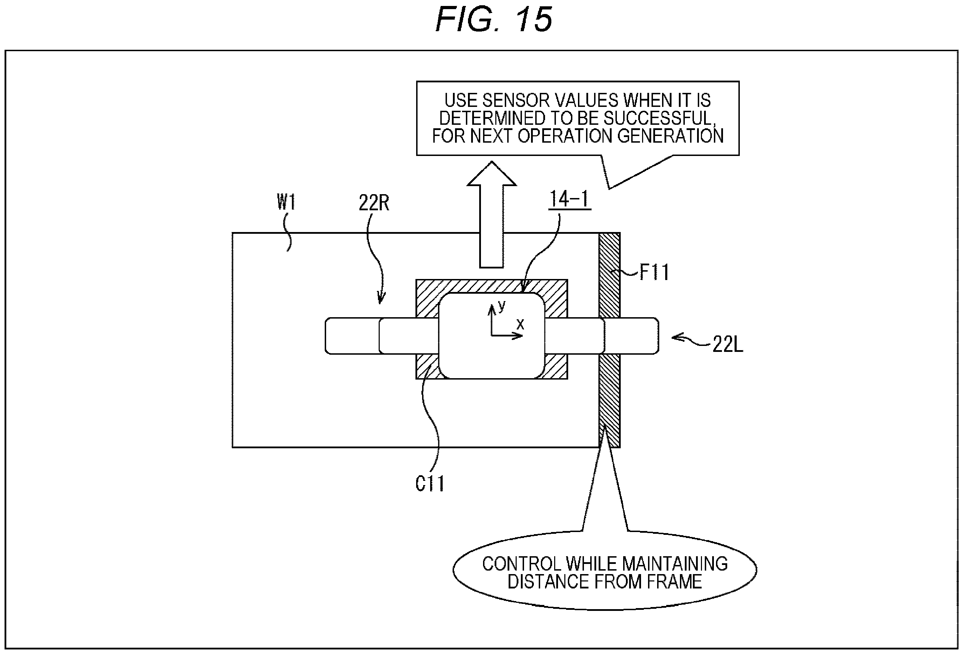

Figs. 14 and 15 are diagrams illustrating a state at the time of success of a task of wiping a window W1 using a cleaner C11.

In Figs. 14 and 15, the cleaner C11 is pressed against the surface of the window W1 by the hand portion 14-1. A frame F1 thicker than the window W1 is provided at the end of the window W1 to surround the window W1. In this example, the operation object is the cleaner C11. Furthermore, objects included in the environment surrounding the operation object are the window W1 and the frame F1.

Fig. 14 is a view of the hand portion 14-1 pressing the cleaner C11 against the surface of the window W1, which is a vertical surface, as viewed from below, and Fig. 15 is a view of the hand portion 14-1 as viewed from the front. The horizontal direction in Fig. 14 is the x-axis direction, and the vertical direction in Fig. 14 is the z-axis direction. The horizontal direction in Fig. 15 is the x-axis direction, and the vertical direction in Fig. 15 is the y-axis direction.

At the start of the task of wiping the window W1, as illustrated in A of Fig. 14, the left finger 22L and the right finger 22R are spread, and the cleaner C11 is pressed against the surface of the window W1 by the base portion 21 as the palm of the hand portion 14-1. In the example of Fig. 14, the left finger 22L is positioned on the right side in the drawing, and the right finger 22R is positioned on the left side in the drawing. The initial position of the hand portion 14 illustrated in A of Fig. 14 is a position where the distance sensors 41-0 provided on the base portion 21 and the distance sensor 41L provided on the inner side of the left finger 22L are arranged in parallel to the window W1.

Here, the robot 1 brings the hand portion 14-1 roughly into contact with the cleaner C11. Since the base portion 21, the left finger 22L, and the right finger 22R are provided with the distance sensors 41, the robot 1 can detect which part of the hand portion 14-1 the cleaner C11 is in contact with on the basis of the sensor values measured by the distance sensors 41 when the robot 1 is brought roughly into contact with the cleaner C11.

After the left finger 22L and the right finger 22R are positioned to be spread, distances are measured by the distance sensors 41L-1 to 41L-3, 41L-7, and 41L-8, which are use sensors. In the case of Fig. 14, as indicated by the light beam L1 indicated by an alternate long and short dash line, sensor values (sensor values indicating distances to the frame F1) within the effective distance range are measured by the distance sensors 41L-1. Here, the effective distance range is a range of a distance larger than 0 and smaller than the distance to the window W1, or a range of a distance larger than the distance to the window W1.

Furthermore, as indicated by the light beams L2 to L4 indicated by broken lines, sensor values out of the effective distance range are measured by the distance sensors 41L-2, 41L-3, and 41L-7.

Since a portion of the left finger 22L provided with the distance sensor 41L-8 is pressed against the cleaner C11 together with the base portion 21, a sensor value within a contact range is measured by the distance sensor 41L-8. The contact range indicates that the sensor value is 0.

In a case where the task of wiping is executed, the progress status of the task is monitored and the hand portion 14-1 is controlled using, as the geometric information, an interval $\delta x$ that is the interval between the end of the cleaner C11 and the end of the window W1. The interval $\delta x$ indicated by the bidirectional arrow in A of Fig. 14 is expressed by Equation (3) below.

[Equation 3]

$$\delta x = \min(\mathbf{x_e}) - \min(\mathbf{x_c}) \qquad \cdots (3)$$

In Equation (3), $x_e$ represents a set of positions of the distance sensors 41 that measure sensor values within the effective distance range. $x_c$ represents a set of positions of the distance sensors 41 that acquire sensor values within the contact range.

In other words, $\min(x_e)$ represents the position of the left end of the frame F1 (the end on the side of the surface in contact with the window W1), and $\max(x_c)$ represents the right end position of the cleaner C11. The positioning control by the hand portion 14-1 is performed such that the interval $\delta x$ decreases.

Specifically, the robot 1 moves the hand portion 14-1 in the state illustrated in A of Fig. 14 in the +x direction (the direction toward the fingertip side of the left finger 22L) indicated by the white arrow. By moving the hand portion 14-1, the right end of the cleaner C11 is brought close to the frame F1 as illustrated in B of Fig. 14.

In this case, as indicated by the light beams L1 to L4 indicated by alternate long and short dash lines, the distance sensors 41L-1 to 41L-3 and 41L-7 measure sensor values within the effective distance range. In this state, it is assumed that $\min(x_e)$ is a position corresponding to the position of the distance sensor 41L-7 and $\max(x_c)$ is a position corresponding to the position of the distance sensor 41L-8, and an interval $\delta x$ of a predetermined length is obtained.

In a case where the interval $\delta x$ becomes sufficiently small, it is determined that the task has succeeded. At this time, as illustrated in Fig. 15, the robot 1 moves the hand portion 14-1 in the +y direction indicated by the white arrow. As the hand portion 14-1 moves, the cleaner C11 also moves in the same +y direction.

The sensor values measured by the distance sensors 41 when it is determined that the task has succeeded are used for a task of moving the hand portion 14-1 in the +y direction as the next operation. In the task of moving the hand portion 14-1 in the +y direction, the movement of the hand portion 14-1 is controlled such that the interval $\delta x$, which is the distance between the cleaner C11 and the frame F1, is maintained at a constant distance.

Typically, wiping a window using the hand portion is often performed with the cleaner held by the left and right finger portions of the hand portion.

In the robot 1, the left finger 22L and the right finger 22R are spread, the cleaner C11 is pressed against the surface of the window W1 by the base portion 21 of the hand portion 14-1, and wiping work is performed while measuring the interval $\delta x$ as the geometric information. Since wiping is performed while measuring the interval $\delta x$, it is possible to move the cleaner C11 to almost the end of the window W1.

Note that the control of the hand portion 14-1 is performed such that the hand portion 14-1 is moved while being decelerated as the interval $\delta x$, which is the geometric information, decreases.

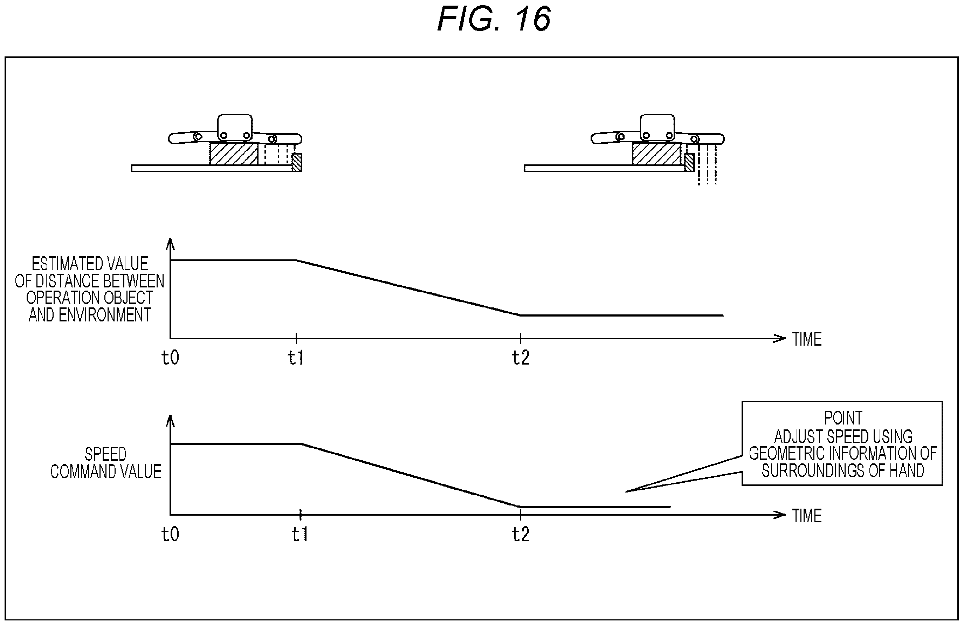

Fig. 16 is a diagram illustrating an example of the interval $\delta x$ and the command value of the moving speed of the hand portion 14-1.

The upper part of Fig. 16 indicates the interval $\delta x$, and the lower part indicates the command value of the moving speed for the hand portion 14-1. The horizontal axis in Fig. 16 represents time.

As described with reference to A of Fig. 14, the period from time t0 to time t1 is a period in which sensor values within the effective distance range are measured by the distance sensors 41L-1. In this period, the interval $\delta x$ is a predetermined distance. Furthermore, the command value of the moving speed is a predetermined speed.

A period from time t1 to time t2 is a period in which the hand portion 14-1 moves in the +x direction. In this period, the interval $\delta x$ gradually decreases from time t1. Furthermore, the command value of the moving speed gradually decreases from time t1.

As described with reference to B of Fig. 14, the period after time t2 is a period in which sensor values within the effective distance range are measured by the distance sensors 41L-1 to 41L-3 and 41L-7. In this period, the interval $\delta x$ is a value lower than that before time t2. Furthermore, the command value of the moving speed is a value lower than that before time t2.

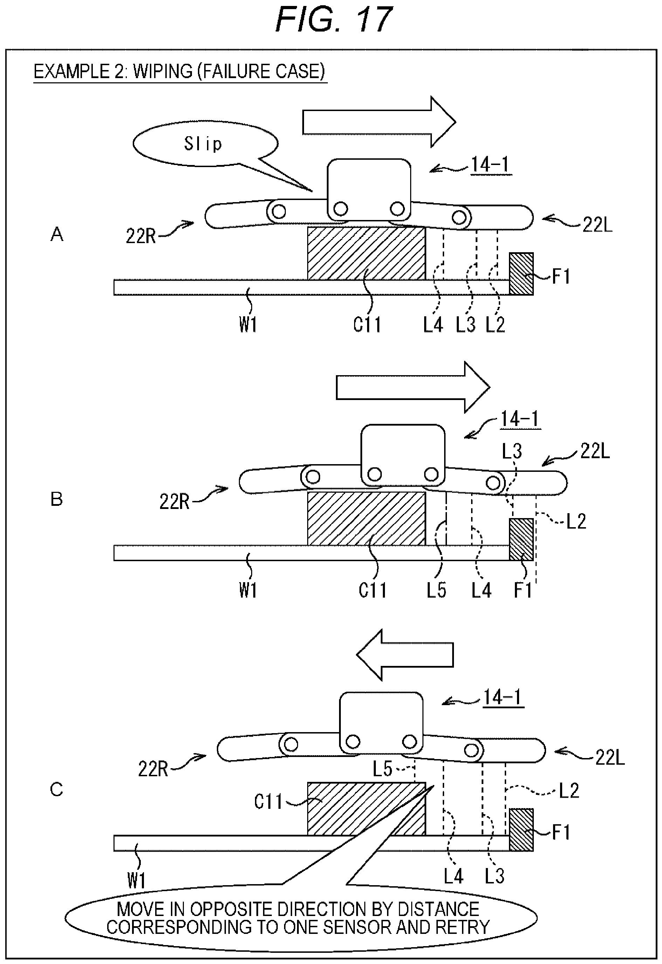

Fig. 17 is a diagram illustrating a state at the time of failure of a task of wiping the window W1.

As illustrated in A of Fig. 17, in a case where the hand portion 14-1 is moved in a state where slipping occurs between the hand portion 14-1 and the cleaner C11, the movement amount of the cleaner C11 is smaller than the movement amount of the hand portion 14-1 as illustrated in B of Fig. 17. That is, the contact position between the cleaner C11 and the hand portion 14-1 is deviated.

In this case, as indicated by the light beam L5 indicated by an alternate long and short dash line, a state where the distance sensor 41L-8, which has measured a sensor value within the contact range before the movement, measures a sensor value out of the effective distance range is made. In a case where the contact position between the cleaner C11 and the hand portion 14-1, that is, the value of $\max(x_c)$ changes, it is determined that slipping has occurred between the hand portion 14-1 and the cleaner C11 (the task has failed).

In a case where a sensor value of one of the distance sensors 41 that has measured a sensor value within the contact range changes, as illustrated in C of Fig. 17, the information processing device 51 moves the hand portion 14-1 in the direction indicated by the white arrow (the direction of the fingertip of the right finger 22R) by a distance corresponding to one of the distance sensors 41 (distance sensor 41L-8) by the return operation task. Thereafter, the robot 1 brings the hand portion 14-1 into contact with the cleaner C11 again and performs the wiping task again.

Note that the control of the hand portion 14 may be performed using not only the sensor values measured by the distance sensors 41 but also a sensor value measured by a vibration sensor or a tactile sensor provided on the hand portion 14. For example, slipping occurred between the hand portion 14 and the operation object is detected on the basis of a sensor value measured by a vibration sensor or a tactile sensor, thereby failure of the task is determined. By using the measurement results by a plurality of types of sensors, the robot 1 can improve the accuracy of the failure determination of the task.

• Example of task of cutting object

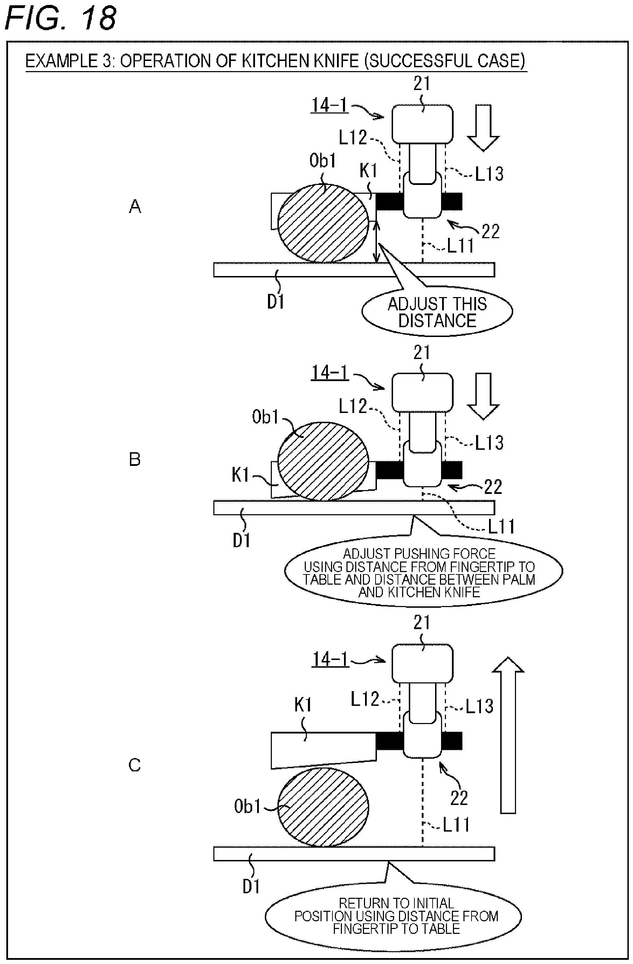

Fig. 18 is a diagram illustrating a state at the time of success of a task of cutting an object Ob1 by operating a kitchen knife K1.

In the example of Fig. 18, the object Ob1 is placed on the desk D1. The robot 1 holds the handle portion of the kitchen knife K1 with the finger portions 22, and applies the blade portion of the kitchen knife K1 to the object Ob1 with the fingertip facing downward. For example, the object Ob1 is food such as a vegetable or a fruit. In this example, the operation object is the kitchen knife K1. Furthermore, objects included in the environment surrounding the operation object are the desk D1 (table) and the spherical object Ob1.

After the blade portion of the kitchen knife K1 is brought into contact with the object Ob1, the distance sensor 41-5 at the fingertip is determined as a use sensor, and the distance is measured by the distance sensor 41-5. In the example of Fig. 18, a sensor value indicating the distance to the desk D1 is measured by the distance sensor 41-5 as indicated by the light beam L11 indicated by a broken line.

In a case where the task of cutting the object Ob1 is executed, the progress status of the task is monitored and the hand portion 14-1 is controlled using, as the geometric information, the distance from the blade portion of the kitchen knife K1 to the desk D1 measured by the distance sensor 41-5. For example, in a case where the fingertip is at the same height as the blade portion of the kitchen knife K1, the distance measured by the distance sensor 41-5 is the same distance as the distance from the blade portion of the kitchen knife K1 to the desk D1 indicated by the bidirectional arrow in A of Fig. 18.

Furthermore, as indicated by the light beams L12 and L13 indicated by broken lines, a plurality of distances to the handle portion of the kitchen knife K1 are measured by the distance sensors 41-0 provided on the base portion 21. As described with reference to Fig. 2 and the like, the plurality of distance sensors 41-0 is provided on the upper surface of the base portion 21 corresponding to the palm.

In the task of cutting the object Ob1, the inclination (orientation) of the kitchen knife K1 obtained on the basis of the sensor values measured by the distance sensors 41-0 is used as the geometric information together with the distance to the desk D1. The inclination of the kitchen knife K1 is represented by, for example, a difference between the distance measured by the light beam L12 and the distance measured by the light beam L13.

The positioning control for lowering the kitchen knife K1 is performed such that the distance to the desk D1 decreases. Specifically, the positioning control is performed by moving the hand portion 14-1 in a downward direction indicated by the white arrow in A of Fig. 18 in a state where the blade portion of the kitchen knife K1 is in contact with the object Ob1. By moving the hand portion 14-1, the blade portion of the kitchen knife K1 is pushed into the object Ob1 as illustrated in A of Fig. 18.

In a case where the sensor value measured by the distance sensor 41-5 becomes sufficiently small, it is determined that the blade portion of the kitchen knife K1 completely comes into contact with the desk D1 and cannot be lowered any more, and it is determined that the task has succeeded.

In addition to the sensor value measured by the distance sensor 41-5, the sensor value measured by the force sensor provided at the wrist portion of the hand portion 14-1 may be used for the success determination of the task. The force sensor provided at the wrist portion of the hand portion 14-1 measures, for example, the reaction force when the blade portion of the kitchen knife K1 hits the desk D1. By using the measurement results by the plurality of types of sensors, the robot 1 can improve the accuracy of the success determination of the task.

In a case where it is determined that the task of cutting the object Ob1 has succeeded, positioning control for separating the kitchen knife K1 from the object Ob1 is performed. Specifically, as illustrated in C of Fig. 18, the positioning control is performed by moving the hand portion 14-1 in an upward direction indicated by the white arrow until the sensor value measured by the distance sensor 41-5 becomes sufficiently large.

Note that the present technology can also be applied to a task of positioning an object using a tool, such as a task of placing an object held by a tong at a specific position, by regarding the end effector to include the tool.

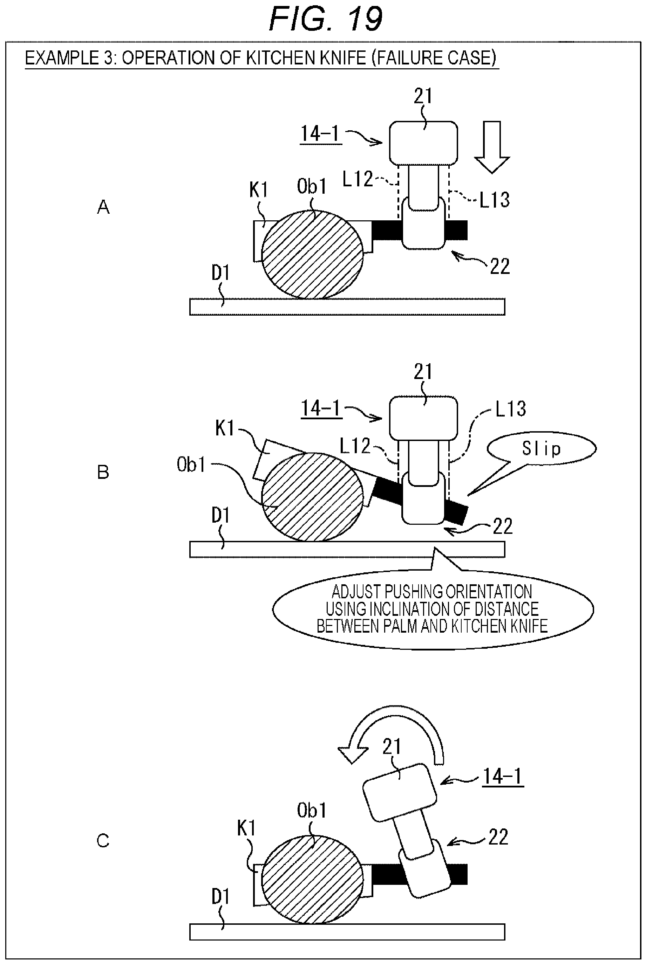

Fig. 19 is a diagram illustrating a state at the time of failure of the task of cutting the object Ob1 by operating the kitchen knife K1.

As illustrated in A of Fig. 19, when the kitchen knife K1 is pushed into the object Ob1, a moment received by the kitchen knife K1 from the object Ob1 causes slipping between the kitchen knife K1 and the hand portion 14-1 as illustrated in B of Fig. 19, and the orientation of the kitchen knife K1 may change.

In this case, as indicated by the light beams L12 and L13 indicated by alternate long and short dash lines, different sensor values are measured by the plurality of distance sensors 41-0. The inclination of the kitchen knife K1 is calculated on the basis of the sensor values measured by the distance sensors 41-0.

The robot 1 adjusts the orientation of pushing the kitchen knife K1 into the object Ob1 on the basis of the inclination of the kitchen knife K1 as the geometric information. Specifically, as indicated by the white arrow in C of Fig. 19, the orientation is adjusted by changing the orientation of the hand portion 14-1 or re-holding the kitchen knife K1 so that the inclination of the kitchen knife K1 becomes 0. Such a task of adjusting the orientation is executed as a return operation task.

By adjusting the orientation of the kitchen knife K1, the robot 1 can resume the task of cutting the object Ob1 without performing the task from the beginning again.

• Example of task of placing operation object between objects

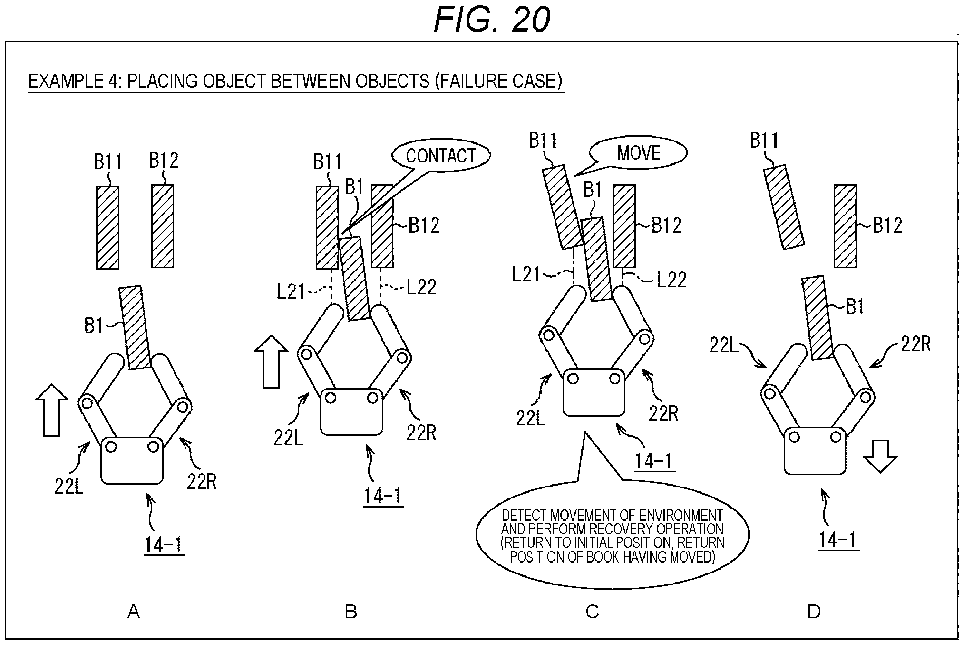

Fig. 20 is a diagram illustrating a state at the time of failure of a task of placing a book B1 between a book B11 and a book B12 other than the book B1.

In the example of Fig. 20, the book B11 and the book B12 are placed, for example, on a bookshelf with a predetermined gap. Fig. 20 is a top view of the positional relationship between the books. In the state of A of Fig. 20, the book B11 and the book B12 are provided in parallel to each other. The robot 1 holds the book B1 with the right finger 22R and the left finger 22L, and moves the book B1 so as to place the book B1 in the gap between the book B11 and the book B12. In this example, the operation object is the book B1. Furthermore, objects included in the environment surrounding the operation object are the book B11 and the book B12.

After the book B1 is held, the distance sensor 41L-5 at the fingertip of the left finger 22L and the distance sensor 41R-5 at the fingertip of the right finger 22R are determined as use sensors, and the distance sensor 41L-5 and the distance sensor 41R-5 measure distances. In the example in B of Fig. 20, as indicated by the light beam L21 indicated by a broken line, the distance to the book B11 is measured by a distance sensor 41L-5 provided at the fingertip of the left finger 22L. Furthermore, as indicated by the light beam L22 indicated by a broken line, the distance to the book B12 is measured by the distance sensor 41R-5 provided at the fingertip of the right finger 22R.

In a case where the task of placing the book B1 between the book B11 and the book B12 is executed, an average value of sensor values measured by the distance sensor 41L-5 and the distance sensor 41R-5 is used as geometric information to monitor the progress status of the task and control the hand portion 14-1.

The positioning control for placing the book B1 is performed such that the book B1 is inserted into the gap between the book B11 and the book B12 until the average value of the sensor values measured by the distance sensor 41L-5 and the distance sensor 41R-5 becomes 0.

When the book B1 is inserted, the book B1 may come into contact with the book B11 in the surroundings as illustrated in B of Fig. 20, and the book B11 may move as illustrated in C of Fig. 20.

In this case, as indicated by the light beam L21 indicated by an alternate long and short dash line, the sensor value measured by the distance sensor 41L-5 becomes a large value. Therefore, the average value of the sensor values measured by the distance sensors 41L-4 and the distance sensor 41R-5 also becomes a large value.

In a case where the average value of the sensor values measured by the distance sensors 41L-4 and the distance sensor 41R-5 becomes large, it is determined that the task has failed. In a case where it is determined that the task has failed, a recovery operation is performed. Specifically, as illustrated in D of Fig. 20, the robot 1 returns the book B1 to the initial position, and returns B11 that has moved to the original position.

After performing the recovery operation, the robot 1 can perform a next task, such as the same task.

As described above, the robot 1 can detect an abnormality in a case where an object in the surroundings of the operation object moves unexpectedly.

<5. Modifications>

• Regarding sensor

Although the geometric information is obtained on the basis of the sensor values measured by the distance sensors 41, the geometric information may be obtained on the basis of a measurement result by a different sensor such as a time of flight (ToF) camera or a stereo camera. As described above, various sensors capable of acquiring distance distribution information (distance information of multiple points) can be used for measurement.

Furthermore, the geometric information may be obtained on the basis of a map surrounding the hand portion 14 created by moving the hand portion 14 to perform scanning and merging time-series data pieces of measurement results by the distance sensors 41. Therefore, even in a case where the number of the distance sensors 41 provided on the hand portion 14 is small, it is possible to acquire the distribution information of the distance necessary for obtaining the geometric information by moving the positions of the distance sensors 41.

The distance sensors 41 may be provided at portions other than the hand portion 14. For example, in a task of picking up the card C1, the other hand (the hand portion 14-2) is positioned under the desk D1, and positioning control is performed on the basis of sensor values measured by the distance sensors 41 provided on the hand portion 14-2.

In this case, the robot 1 can perform positioning control using the hand portion 14-2 at the same time as positioning the hand portion 14-1 at the initial position. Therefore, the robot 1 can shorten the time required for the task.

In a case where the target position to be the destination of movement of the operation object does not have any shape feature but a mark is provided instead, the operation object may be moved to the target position on the basis of information output from an RGB camera or a color sensor mounted on the hand portion 14.

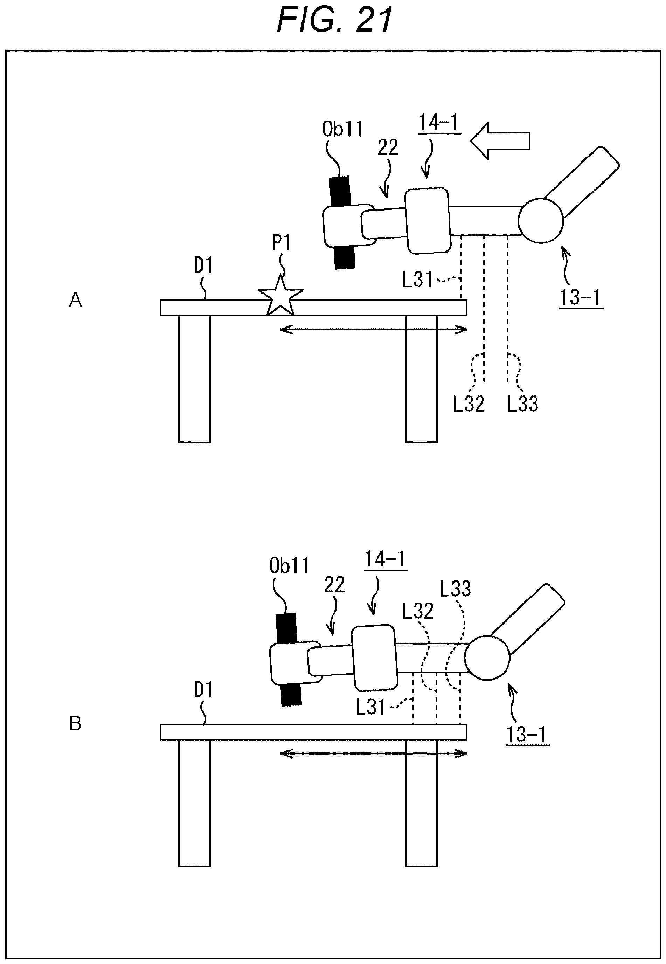

Fig. 21 is a diagram illustrating a state of a task of positioning an operation object at a specific position of the desk D1.

In the example of Fig. 21, there is no shape feature or mark on the top plate of the desk D1. A position P1 on the top plate of the desk D1 indicated by the star is a target position where the operation object is to be positioned. The robot 1 holds the object Ob11 with the finger portions 22 and moves the object Ob1 so as to place the object Ob1 at the position P1. In this example, the operation object is the object Ob11. Furthermore, an object included in the environment surrounding the operation object is the desk D1.

In a case where the task of positioning the object Ob11 at the position P1 is executed, first, a target distance from the end of the desk D1 to the position P1 indicated by the bidirectional arrow in A of Fig. 21 is calculated on the basis of the image information output by the visual sensors 12A.

After the object Ob11 is held, the plurality of distance sensors 41 provided on the arm portion 13-1 is determined as use sensors, and the distances are measured by the distance sensors 41. In the example of A of Fig. 21, the distance sensors 41 provided on the arm portion 13-1 are arranged in parallel to the top plate of the desk D1, and the distance to the desk D1 is measured by the light beam L31.

In the task of positioning the operation object at the position P1, the arm portion 13-1 is controlled using the distance from the end of the desk D1 to the object Ob11 as the geometric information. The distance from the end of the desk D1 to the object Ob11 is obtained on the basis of sensor values measured by the plurality of distance sensors 41 provided on the arm portion 13-1.

The positioning for positioning the object Ob11 at the position P1 is performed so that the difference between the distance from the end of the desk D1 to the object Ob11 and the target distance becomes small. Specifically, by moving the arm portion 13-1 in the left direction indicated by the white arrow in A of Fig. 21, the distance from the end of the desk D1 to the object Ob11 becomes the same as the target distance indicated by the bidirectional arrow as illustrated in B of Fig. 21.

In this case, as indicated by the light beams L31 to L33 indicated by broken lines, the distance sensors 41 provided on the arm portion 13-1 measure sensor values indicating the distance to the desk D1. When the difference between the distance from the end to the desk D1 to the object Ob11 and the target position becomes sufficiently small, the arm portion 13-1 is moved downward so as to place the object Ob11 on the desk D1, so that the object Ob11 is positioned at the position P1.

• Regarding actuator

An actuator other than the electromagnetic motor may be mounted on the end effector. For example, a suction type end effector is mounted on the robot 1. The robot 1 can easily hold a light object such as a card using a suction type end effector.

In the case of holding a heavy object using a suction type end effector, similarly to the case of picking up the card C1, the robot 1 can once move the object to the front side of the desk while sucking the object, and then suck and hold the back of the object with a suction mechanism of another finger portion. By once moving a heavy object to the front side of the desk and then holding the object, the robot 1 can increase the stability of holding.

• Regarding control

The positioning control may be performed on the basis of the sensor values measured by the distance sensors 41 and information measured at the start of the task by the visual sensors 12A (a three-dimensional measuring instrument such as a Depth camera). Since the distance sensors 41 are discretely arranged, the accuracy of the geometric information obtained on the basis of the sensor values measured by such distance sensors 41 may be low.

By complementing the distance information between the distance sensors 41 on the basis of the information measured by the visual sensors 12A, the robot 1 can obtain highly accurate geometric information, and the accuracy of positioning control of a small object or an object having a complicated shape can be improved.

The operation of moving the hand portion 14-1 to the initial position may be performed a plurality of times. For example, in a case where the quality of the sensor values measured by the distance sensors 41 is poor (a case where noise is large, a case where there are many measurement omissions, and the like) after the hand portion 14-1 is moved to the initial position, the robot 1 changes the orientation of the hand portion 14-1 from the initial position or moves the hand portion 14-1 to an initial position that is another candidate.

• Regarding system configuration

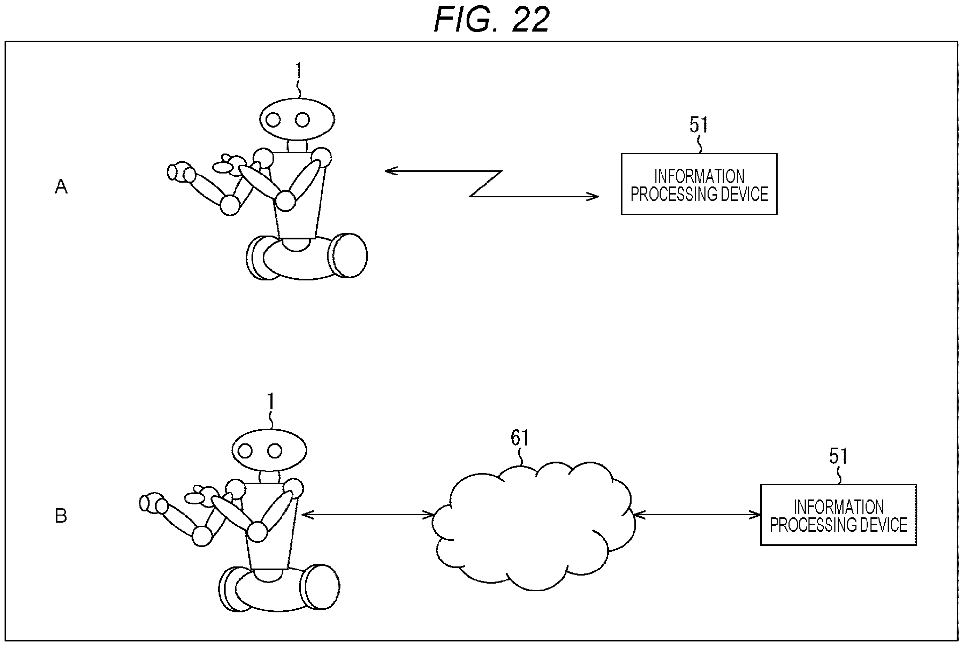

Fig. 22 is a diagram illustrating a configuration example of a system.

The system illustrated in Fig. 22 is configured by providing the information processing device 51 as an external apparatus of the robot 1. In this manner, the information processing device 51 may be provided outside the housing of the robot 1.

Wireless communication of a predetermined standard such as a wireless LAN or long term evolution (LTE) is performed between the robot 1 and the information processing device 51 in Fig. 22.

Various types of information such as information indicating the state of the robot 1 and information indicating the detection result of the sensors are transmitted from the robot 1 to the information processing device 51. Information for controlling the operation of the robot 1 and the like are transmitted from the information processing device 51 to the robot 1.

The robot 1 and the information processing device 51 may be directly connected as illustrated in A of Fig. 22, or may be connected via a network 61 such as the Internet as illustrated in B of Fig. 22. The operations of the plurality of robots 1 may be controlled by one information processing device 51.

• Regarding computer

The above-described series of processing can be performed by hardware or software. In a case where the series of processing is executed by software, a program implementing the software is installed from a program recording medium to a computer incorporated in dedicated hardware, a general-purpose personal computer, or the like.

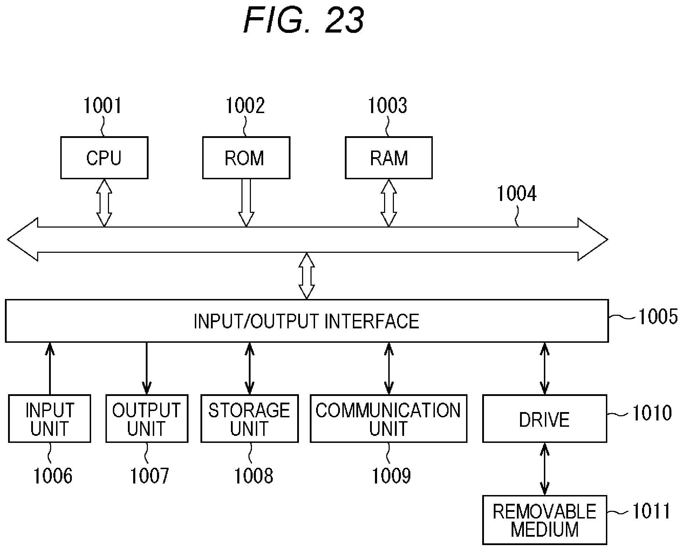

Fig. 23 is a block diagram illustrating a configuration example of hardware of a computer that performs the above-described series of processing using a program.

A central processing unit (CPU) 1001, a read only memory (ROM) 1002, and a random access memory (RAM) 1003 are connected to each other by a bus 1004.

An input/output interface 1005 is further connected to the bus 1004. An input unit 1006 including a keyboard, a mouse, and the like, and an output unit 1007 including a display, a speaker, and the like are connected to the input/output interface 1005. Furthermore, a storage unit 1008 including a hard disk, a nonvolatile memory, and the like, a communication unit 1009 including a network interface and the like, and a drive 1010 that drives a removable medium 1011 are connected to the input/output interface 1005.

In the computer configured as described above, for example, the CPU 1001 loads a program stored in the storage unit 1008 into the RAM 1003 via the input/output interface 1005 and the bus 1004 and executes the program, so that the above-described series of processing is performed.

The program executed by the CPU 1001 is provided, for example, by being recorded in the removable medium 1011 or via a wired or wireless transmission medium such as a local area network, the Internet, or digital broadcasting, and is installed in the storage unit 1008.

Note that the program executed by the computer may be a program that causes pieces of processing to be performed in time series in the order described in the present specification, or may be a program that causes the pieces of processing to be performed in parallel or at necessary timing such as when a call is made.

In the present specification, a system means a set of a plurality of components (devices, modules (parts), and the like), and it does not matter whether or not all the components are in the same housing. Therefore, a plurality of devices housed in separate housings and connected via a network, and one device having one housing in which a plurality of modules is housed are both systems.

Note that the effects described in the present specification are merely examples and are not limited, and other effects may be provided.

Embodiments of the present technology are not limited to the above-described embodiment, and various modifications can be made without departing from the gist of the present technology.

For example, the present technology can have a configuration of cloud computing in which one function is shared and processed in cooperation by a plurality of devices via a network.

Furthermore, steps described in the above-described flowcharts can be performed by one device or can be shared and executed by a plurality of devices.

Moreover, in a case where a plurality of pieces of processing is included in one step, the plurality of pieces of processing included in the one step can be executed by one device or can be shared and executed by a plurality of devices.

• Combination examples of configurations

The present technology may also have the following configurations.

(1) An information processing device including:
a control unit configured to control a position of a hand portion that is used for execution of a task of moving a target object to a specific position and that has a plurality of sensors provided on a surface, on the basis of positional relationship information indicating a positional relationship between the target object and an object in surroundings of the target object, the positional relationship being estimated on the basis of distances measured by the sensors during movement of the hand portion.

(2) The information processing device according to (1),

in which the hand portion includes a plurality of finger portions and a support portion that supports the plurality of finger portions, and
a plurality of the sensors is provided side by side at least on an inner surface of each of the finger portions that are contact surfaces with the target object.

(3) The information processing device according to (2),
in which the control unit controls a position of the hand portion by driving an arm portion that supports the hand portion and driving each of the finger portions.

(4) The information processing device according to (3) further including
an estimation unit that estimates the positional relationship on the basis of a distribution of distances measured by the plurality of sensors.

(5) The information processing device according to (4),
in which the estimation unit estimates a contactable area of the target object where the finger portions are contactable on the basis of the number of sensors that are included in the sensors and that have measured distances within a predetermined range.

(6) The information processing device according to (5),

in which the task is a task of moving the target object placed on a top plate as the object in surroundings to a position enabling the target object to be sandwiched from above and below by the finger portions, and
the control unit moves the hand portion in a moving direction of the target object in a state where a finger portion above the target object among the finger portions is in contact with the target object and where sensors included in the sensors and provided on a finger portion below the top plate among the finger portions are positioned side by side in parallel to the moving direction.

(7) The information processing device according to (6),

in which the control unit controls a moving speed of the hand portion according to the contactable area.

(8) The information processing device according to any one of (2) to (7) further including:

an initial position determination unit that determines an initial position of the hand portion according to the task on the basis of a measurement result by a visual sensor provided at a position different from the sensors; and an initial position movement control unit that moves the hand portion to an initial position.

(9) The information processing device according to (8),
in which the initial position determination unit determines, according to the task, a use sensor that is at least one of the sensors to be used, from among the plurality of sensors provided on the hand portion, and determines an initial position of the use sensor.

(10) The information processing device according to any one of (1) to (9) further including

a determination unit that determines whether or not the task is successful according to whether or not the positional relationship satisfies a condition determined according to the task,
in which in a case where it is determined that the task has failed, the control unit controls a position of the hand portion according to a return task determined on the basis of the positional relationship when the task has failed.

(11) The information processing device according to (4),
in which the estimation unit estimates the positional relationship between the target object and the object in surroundings on the basis of an interval between a sensor that is included in the sensors and that has measured a distance within a first range and a sensor that is included in the sensors and that has measured a distance within a second range.

(12) The information processing device according to (11),

in which the task is a task of bringing the target object being in contact with a plane close to the object provided at an end of the plane while the target object is pressed against the plane by the support portion on which at least two of the sensors are provided side by side, and
the control unit moves the hand portion in a state where a sensor included in the sensors and provided on the finger portions and a sensor included in the sensors and provided on the support portion are positioned side by side in parallel to the plane.

(13) The information processing device according to (4),
in which the estimation unit estimates the positional relationship on the basis of a distance to an object in a moving direction, the distance being measured by sensors included in the sensors and provided at distal ends of the finger portions holding the target object.

(14) The information processing device according to (13),
in which the estimation unit further estimates an orientation of the target object on the basis of distances to the target object measured by sensors included in the sensors and provided side by side on the support portion.

(15) The information processing device according to (4),
in which the estimation unit estimates the positional relationship on the basis of an average of distances to the object in a moving direction measured by sensors included in the sensors and provided at respective distal ends of the plurality of finger portions holding the target object.

(16) An information processing method performed by an information processing device, including:
controlling a position of a hand portion that is used for execution of a task of moving a target object to a specific position and that has a plurality of sensors provided on a surface, on the basis of positional relationship information indicating a positional relationship between the target object and an object in surroundings of the target object, the positional relationship being estimated on the basis of distances measured by the sensors during movement of the hand portion.

(17) A program that causes a computer to perform processing of:
controlling a position of a hand portion that is used for execution of a task of moving a target object to a specific position and that has a plurality of sensors provided on a surface, on the basis of positional relationship information indicating a positional relationship between the target object and an object in surroundings of the target object, the positional relationship being estimated on the basis of distances measured by the sensors during movement of the hand portion.

REFERENCE SIGNS LIST

| | |
|---|---|
| 1 | Robot |
| 13 | Arm portion |
| 14 | Hand portion |
| 21 | Base portion |
| 22 | Finger portion |
| 41 | Distance sensor |
| 51 | Information processing device |
| 61 | Network |
| 101 | Environment measurement unit |
| 102 | Task determination unit |
| 103 | Hand and finger initial position determination unit |
| 104 | Initial position database |
| 105 | Initial position transfer control unit |
| 106 | Target value calculation unit |
| 107 | Geometric information estimation unit |
| 108 | Positioning control unit |
| 109 | Task success/failure condition calculation unit |
| 110 | Task success/failure determination unit |
| 121 | Drive unit |
| 131 | Subtractor |
| 132 | Converter |
| 133 | Subtractor |
| 134 | Controller |

**Claims**

1. An information processing device comprising:
a control unit configured to control a position of a hand portion that is used for execution of a task of moving a target object to a specific position and that has a plurality of sensors provided on a surface, on a basis of positional relationship information indicating a positional relationship between the target object and an object in surroundings of the target object, the positional relationship being estimated on a basis of distances measured by the sensors during movement of the hand portion.

2. The information processing device according to claim 1,

wherein the hand portion includes a plurality of finger portions and a support portion that supports the plurality of finger portions, and
a plurality of the sensors is provided side by side at least on an inner surface of each of the finger portions that are contact surfaces with the target object.

3. The information processing device according to claim 2,
wherein the control unit controls a position of the hand portion by driving an arm portion that supports the hand portion and driving each of the finger portions.

4. The information processing device according to claim 3 further comprising
an estimation unit that estimates the positional relationship on a basis of a distribution of distances measured by the plurality of sensors.

5. The information processing device according to claim 4,
wherein the estimation unit estimates a contactable area of the target object where the finger portions are contactable on a basis of the number of sensors that are included in the sensors and that have measured distances within a predetermined range.

**6.** The information processing device according to claim 5,

wherein the task is a task of moving the target object placed on a top plate as the object in surroundings to a position enabling the target object to be sandwiched from above and below by the finger portions, and the control unit moves the hand portion in a moving direction of the target object in a state where a finger portion above the target object among the finger portions is in contact with the target object and where sensors included in the sensors and provided on a finger portion below the top plate among the finger portions are positioned side by side in parallel to the moving direction.

**7.** The information processing device according to claim 6,
wherein the control unit controls a moving speed of the hand portion according to the contactable area.

**8.** The information processing device according to claim 2 further comprising:

an initial position determination unit that determines an initial position of the hand portion according to the task on a basis of a measurement result by a visual sensor provided at a position different from the sensors; and an initial position movement control unit that moves the hand portion to an initial position.

**9.** The information processing device according to claim 8,
wherein the initial position determination unit determines, according to the task, a use sensor that is at least one of the sensors to be used, from among the plurality of sensors provided on the hand portion, and determines an initial position of the use sensor.

**10.** The information processing device according to claim 1 further comprising

a determination unit that determines whether or not the task is successful according to whether or not the positional relationship satisfies a condition determined according to the task, wherein in a case where it is determined that the task has failed, the control unit controls a position of the hand portion according to a return task determined on a basis of the positional relationship when the task has failed.

**11.** The information processing device according to claim 4,
wherein the estimation unit estimates the positional relationship between the target object and the object in surroundings on a basis of an interval between a sensor that is included in the sensors and that has measured a distance within a first range and a sensor that is included in the sensors and that has measured a distance within a second range.

**12.** The information processing device according to claim 11,

wherein the task is a task of bringing the target object being in contact with a plane close to the object provided at an end of the plane while the target object is pressed against the plane by the support portion on which at least two of the sensors are provided side by side, and the control unit moves the hand portion in a state where a sensor included in the sensors and provided on the finger portions and a sensor included in the sensors and provided on the support portion are positioned side by side in parallel to the plane.

**13.** The information processing device according to claim 4,
wherein the estimation unit estimates the positional relationship on a basis of a distance to an object in a moving direction, the distance being measured by sensors included in the sensors and provided at distal ends of the finger portions holding the target object.

**14.** The information processing device according to claim 13,
wherein the estimation unit further estimates an orientation of the target object on a basis of distances to the target object measured by sensors included in the sensors and provided side by side on the support portion.

**15.** The information processing device according to claim 4,
wherein the estimation unit estimates the positional relationship on a basis of an average of distances to the object in a moving direction measured by sensors included in the sensors and provided at respective distal ends of the plurality of finger portions holding the target object.

**16.** An information processing method performed by an information processing device, comprising:

controlling a position of a hand portion that is used for execution of a task of moving a target object to a specific position and that has a plurality of sensors provided on a surface, on a basis of positional relationship information indicating a positional relationship between the target object and an object in surroundings of the target object, the positional relationship being estimated on a basis of distances measured by the sensors during movement of the hand portion.

**17.** A program that causes a computer to perform processing of:

controlling a position of a hand portion that is used for execution of a task of moving a target object to a specific position and that has a plurality of sensors provided on a surface, on a basis of positional relationship information indicating a positional relationship between the target object and an object in surroundings of the target object, the positional relationship being estimated on a basis of distances measured by the sensors during movement of the hand portion.

EP 4 190 514 A1

# FIG. 1

# FIG. 2

# FIG. 3

# FIG. 4

*FIG. 5*

```
                          ROBOT                    51
                  ┌──────────────────────────────────────────────────────────────────────┐
                  │                            ↓                                           │
                  │  ┌──────────────┐      ┌──────────────┐      ┌──────────────┐          │
              11─ │  │    BODY      │◄────►│              │◄────►│     HAND     │ ─14       │
                  │  │   PORTION    │      │              │      │   PORTION    │           │
                  │  └──────────────┘      │              │      │ ┌──────────┐ │           │
                  │                        │              │      │ │ DISTANCE │ │ ─41       │
              12─ │  ┌──────────────┐      │ INFORMATION  │      │ │  SENSOR  │ │           │
                  │  │    HEAD      │      │ PROCESSING   │      │ └──────────┘ │           │
                  │  │   PORTION    │◄────►│   DEVICE     │◄────►└──────────────┘           │
             12A─ │  │ ┌──────────┐ │      │              │                                 │
                  │  │ │  VISUAL  │ │      │              │                                 │
                  │  │ │  SENSOR  │ │      │              │      ┌──────────────┐           │
                  │  │ └──────────┘ │      │              │      │ MOVING BODY  │ ─15       │
                  │  └──────────────┘      │              │◄────►│   PORTION    │           │
              13─ │  ┌──────────────┐      │              │      └──────────────┘           │
                  │  │     ARM      │◄────►│              │                                 │
                  │  │   PORTION    │      │              │                                 │
                  │  └──────────────┘      └──────────────┘                                 │
                  └──────────────────────────────────────────────────────────────────────┘
```

## FIG. 6

INFORMATION PROCESSING DEVICE 51

VISUAL SENSOR 12A → ENVIRONMENT MEASUREMENT UNIT 101

INITIAL POSITION DATABASE 104

HAND AND FINGER INITIAL POSITION DETERMINATION UNIT 103

INITIAL POSITION MOVEMENT CONTROL UNIT 105

TASK DETERMINATION UNIT 102

TARGET VALUE CALCULATION UNIT 106

TARGET VALUE OF GEOMETRIC INFORMATION

DISTANCE SENSOR 41

DISTANCE DISTRIBUTION INFORMATION

GEOMETRIC INFORMATION ESTIMATION UNIT 107

GEOMETRIC INFORMATION

POSITIONING CONTROL UNIT 108

DRIVE UNIT 121

TASK SUCCESS/FAILURE CONDITION CALCULATION UNIT 109

TASK SUCCESS/FAILURE DETERMINATION UNIT 110

STOP COMMAND

EP 4 190 514 A1

## FIG. 7

```
                                    ┌─────────────┐
                                    │    START    │
                                    └──────┬──────┘
                                           ▼
                      ┌────────────────────────────────────────┐ S1
                      │            DETERMINE TASK               │
                      └────────────────────┬───────────────────┘
                                           ▼
                      ┌────────────────────────────────────────┐ S2
                      │  MEASURE ENVIRONMENT WITH VISUAL SENSORS│
                      └────────────────────┬───────────────────┘
                                           ▼
                      ┌────────────────────────────────────────┐ S3
                      │       CALCULATE INITIAL POSITIONS AND   │
                      │  ORIENTATIONS OF ROBOT HAND AND FINGERS │
                      └────────────────────┬───────────────────┘
                                           ▼
                      ┌────────────────────────────────────────┐ S4
                      │          DETERMINE USE SENSOR           │
                      └────────────────────┬───────────────────┘
                                           ▼
                      ┌────────────────────────────────────────┐ S5
                      │      DETERMINE GEOMETRIC INFORMATION    │
                      │         TO BE USED FOR CONTROL          │
                      └────────────────────┬───────────────────┘
                                           ▼
                      ┌────────────────────────────────────────┐ S6
                      │      MOVE ROBOT HAND TO INITIAL POSITION│
                      └────────────────────┬───────────────────┘
                                           ▼
                      ┌────────────────────────────────────────┐ S7
                      │  BRING HAND INTO CONTACT WITH OPERATION OBJECT│
                      └────────────────────┬───────────────────┘
                                           ▼
                      ┌────────────────────────────────────────┐ S8
                      │ CALCULATE TARGET VALUE OF GEOMETRIC INFORMATION│
                      └────────────────────┬───────────────────┘
                                           ▼
                      ┌────────────────────────────────────────┐ S9
                      │ DETERMINE SUCCESS CONDITION AND FAILURE CONDITION│
                      └────────────────────┬───────────────────┘
                                           ▼
                      ┌────────────────────────────────────────┐ S10
                      │       CALCULATE GEOMETRIC INFORMATION   │
                      └────────────────────┬───────────────────┘
                                           ▼
                      ┌────────────────────────────────────────┐ S11
                      │ PERFORM POSITIONING CONTROL OF OPERATION OBJECT│
                      └────────────────────┬───────────────────┘
                                           ▼
┌──────────────────────────┐ S17   ◄ YES  ◇ HAS ABNORMALITY OCCURRED? ◇ S12
│ SET RETURN OPERATION TASK│◄───────────
│ ON THE BASIS OF CURRENT  │              │ NO
│    SENSOR VALUES         │              ▼
└──────────────────────────┘         ◇ HAS TASK SUCCEEDED? ◇ S13 ─ NO
                                          │ YES
                                          ▼
                      ┌────────────────────────────────────────┐ S14
                      │                 STOP                    │
                      └────────────────────┬───────────────────┘
                                           ▼
┌──────────────────────────┐ S16  NO  ◇ HAVE ALL TASKS BEEN ◇ S15
│ CALCULATE COMMAND VALUE  │◄────────    COMPLETED?
│ FOR NEXT TASK ON THE     │             │ YES
│ BASIS OF CURRENT SENSOR  │             ▼
│         VALUES           │   ┌────────────────────────────────┐ S18
└──────────────────────────┘   │ RELEASE CONTACT WITH OPERATION OBJECT│
                               └────────────────┬───────────────┘
                                                ▼
                                         ┌─────────────┐
                                         │     END     │
                                         └─────────────┘
```

# FIG. 8

EXAMPLE 1: HOLDING THIN OBJECT (SUCCESSFUL CASE)

A

POINT ②
BROUGHT ROUGHLY INTO
CONTACT WITH OBJECT

22R

14-1

C1

D1

L1

POINT ①
POSITION FINGER
FOR EASY DETECTION

L2 L3 L4 L5

22L

B

22R

14-1

C1

D1

L1

L2 L3 L4 L5

22L

# FIG. 9

# FIG. 10

EXAMPLE 1: HOLDING THIN OBJECT (FAILURE CASE)

# FIG. 11

A

C1

D1

L1

22L

L2

L3

L4

22R

L5

14-1

CONTACT SURFACE
IS INSUFFICIENT

B

C1

D1

L1

22L

L2

L3

L4

22R

L5

14-1

HAND IS
MOVED FORWARD BY
DISTANCE CORRESPONDING TO
TWO DISTANCE SENSORS
AND RETRY

# FIG. 12

EP 4 190 514 A1

# FIG. 13

EP 4 190 514 A1

# FIG. 14

EXAMPLE 2: WIPING (SUCCESSFUL CASE)

A

POINT ①
BROUGHT ROUGHLY INTO
CONTACT WITH OBJECT

POINT ②
POSITION FINGER
FOR EASY DETECTION

14-1

22R · 22L · L3 · L4 · L2 · L1 · F1 · W1 · C11

ADJUST THIS
DISTANCE

B

14-1

22R · 22L · L4 · F1 · W1 · C11 · L3 · L2 · L1

## FIG. 15

USE SENSOR VALUES WHEN IT IS
DETERMINED TO BE SUCCESSFUL,
FOR NEXT OPERATION GENERATION

W1   22R   14-1

F11

22L

C11

CONTROL WHILE MAINTAINING
DISTANCE FROM FRAME

EP 4 190 514 A1

# FIG. 16

ESTIMATED VALUE OF DISTANCE BETWEEN OPERATION OBJECT AND ENVIRONMENT

t0　t1　t2　TIME

SPEED COMMAND VALUE

t0　t1　t2　TIME

POINT
ADJUST SPEED USING GEOMETRIC INFORMATION OF SURROUNDINGS OF HAND

# FIG. 17

EXAMPLE 2: WIPING (FAILURE CASE)

# FIG. 18

EXAMPLE 3: OPERATION OF KITCHEN KNIFE (SUCCESSFUL CASE)

A

14-1

21

L12

L13

0b1

K1

22

L11

D1

ADJUST THIS DISTANCE

B

14-1

21

L12

L13

0b1

K1

22

L11

D1

ADJUST PUSHING FORCE USING DISTANCE FROM FINGERTIP TO TABLE AND DISTANCE BETWEEN PALM AND KITCHEN KNIFE

C

14-1

21

K1

L12

L13

0b1

22

L11

D1

RETURN TO INITIAL POSITION USING DISTANCE FROM FINGERTIP TO TABLE

# FIG. 19

EXAMPLE 3: OPERATION OF KITCHEN KNIFE (FAILURE CASE)

A

14-1

21

K1  Ob1  L12  L13

D1  22

B

14-1

21

K1

Ob1  L12  L13

D1  Slip

22

ADJUST PUSHING ORIENTATION
USING INCLINATION OF DISTANCE
BETWEEN PALM AND KITCHEN KNIFE

C

21

14-1

K1  Ob1

22

D1

## FIG. 20

EXAMPLE 4: PLACING OBJECT BETWEEN OBJECTS (FAILURE CASE)

A
B — CONTACT
C — MOVE — DETECT MOVEMENT OF ENVIRONMENT AND PERFORM RECOVERY OPERATION (RETURN TO INITIAL POSITION, RETURN POSITION OF BOOK HAVING MOVED)
D

EP 4 190 514 A1

# FIG. 21

# FIG. 22

A

INFORMATION PROCESSING DEVICE — 51

B

INFORMATION PROCESSING DEVICE — 51

EP 4 190 514 A1

# FIG. 23

CPU 1001

ROM 1002

RAM 1003

1004

INPUT/OUTPUT INTERFACE — 1005

| INPUT UNIT | OUTPUT UNIT | STORAGE UNIT | COMMUNICATION UNIT | DRIVE ~1010 |

1006  1007  1008  1009

REMOVABLE MEDIUM ~1011

EP 4 190 514 A1

## INTERNATIONAL SEARCH REPORT

| International application No. |
|---|
| **PCT/JP2021/027079** |

**A. CLASSIFICATION OF SUBJECT MATTER**

***B25J 13/08***(2006.01)i; ***B25J 15/08***(2006.01)i
FI: B25J13/08 Z; B25J15/08

According to International Patent Classification (IPC) or to both national classification and IPC

**B. FIELDS SEARCHED**

Minimum documentation searched (classification system followed by classification symbols)

B25J13/08; B25J15/08

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-274204 A (SAMSUNG ELECTRONICS CO., LTD.) 26 November 2009 (2009-11-26) paragraphs [0031]-[0064], fig. 1-13 | 1-3, 16-17 |
| Y | | 4, 8-11, 13, 15 |
| Y | WO 2016/135861 A1 (HITACHI, LTD.) 01 September 2016 (2016-09-01) paragraphs [0026]-[0106], fig. 1-16 | 4, 8-11, 13, 15 |
| A | JP 2019-59021 A (TOYOTA MOTOR ENGINEERING & MANUFACTURING NORTH AMERICA, INC.) 18 April 2019 (2019-04-18) fig. 1 | 1-17 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 October 2021** | **12 October 2021** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/027079**

| Patent document cited in search report | | | Publication date (day/month/year) | Patent family member(s) | | | Publication date (day/month/year) |
|---|---|---|---|---|---|---|---|
| JP | 2009-274204 | A | 26 November 2009 | US 2009/0285664 A1 paragraphs [0045]-[0083], fig. 1-13 KR 10-2009-0118153 A | | | |
| WO | 2016/135861 | A1 | 01 September 2016 | (Family: none) | | | |
| JP | 2019-59021 | A | 18 April 2019 | US 2013/0325181 A1 fig. 1 | | | |

**EP 4 190 514 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016196077 A
- JP 2020016446 A